# EUROPEAN PATENT SPECIFICATION

(11) **EP 4 672 369 B1**
(45) Date of publication and mention of the grant of the patent: **18.11.2026**
(21) Application number: 25176447.8
(22) Date of filing: 14.05.2025
(51) Int. Cl.: H01M 4/36, H01M 4/58, H01M 4/02, H01M 10/054

(54) **POSITIVE-ELECTRODE ACTIVE MATERIAL, PREPARING METHOD THEREOF, AND BATTERY**
POSITIVELEKTRODENAKTIVMATERIAL, HERSTELLUNGSVERFAHREN DAFÜR UND BATTERIE
MATÉRIAU ACTIF D'ÉLECTRODE POSITIVE, SON PROCÉDÉ DE PRÉPARATION ET BATTERIE

(30) Priority: 24.06.2024 CN 202410826051
(43) Date of publication of application: 31.12.2025
(73) Proprietor: Xiamen Hithium Energy Storage Technology Co., Ltd., Xiamen, Fujian 361100 (CN)
(72) Inventor: WU, Han, Xiamen, Fujian 361100 (CN)
(74) Representative: Santarelli

(56) References cited:
- KR-A- 20120 126 021
- US-A1- 2017 324 082
- US-A1- 2018 006 325
- "A Basic Guide to Particle Characterization", MALVERN INSTRUMENTS WORLDWIDE - WHITE PAPER, 2 May 2012 (2012-05-02), pages 1 - 26, XP055089322, Retrieved from the Internet <URL:http://golik.co.il/Data/ABasicGuidtoParticleCharacterization(2)_1962085150.pdf> [retrieved on 20250825]

## Description

### TECHNICAL FIELD

This disclosure relates to the field of energy storage, and in particular, to a positive-electrode active material, a preparing method thereof, and a battery.

### BACKGROUND

Sodium iron phosphate pyrophosphate Na₄Fe₃(PO₄)₂(P₂O₇) has a three-dimensional sodium-ion diffusion channel and a sodium superionic conductor structure. The Sodium iron phosphate pyrophosphate Na₄Fe₃(PO₄)₂(P₂O₇) has the characteristics such as a high voltage plateau, a high capacity, an excellent rate, and outstanding cycling stability, and holds significant potential as a positive electrode material for large-scale production in sodium-ion batteries. However, the compacted density of the existing Na₄Fe₃(PO₄)₂(P₂O₇) remains relatively low.
KR1020120126021A discloses a positive electrode active material powder for secondary battery capable of obtaining lithium secondary batteries with enhanced capacity, a manufacturing method thereof, and a lithium secondary battery are provided to increase capacity per volume and capacity retention rate of the lithium secondary battery. CONSTITUTION: A positive electrode active material powder for secondary battery is composed of secondary particles in which primary particles of lithium nickel manganese cobalt complex oxide represented by chemical formula (1) are coagulated. The chemical formula (1) is as follows: Li_x Ni_(1-y-z) Mn_y Co_z O_2. The average particle diameter of the secondary particles consisting of the cathode active material powder for the secondary lithium battery is 4-30 microns. The pressing density of the positive electrode active material powder for the secondary lithium battery is 3.55 g/cm^3 or more when the cathode active material powder is compressed into 3 ton/cm^2. In the chemical formula (1), x is 0.98 <= x <= 1.2, and y is 0 < y <= 0.5. However, y+z < 1.0.
US20170324082A1 discloses a positive electrode for a nonaqueous secondary battery including an active material layer which has sufficient electron conductivity with a low ratio of a conductive additive. A positive electrode for a nonaqueous secondary battery including an active material layer which is highly filled with an active material, id est, including the active material and a low ratio of a conductive additive. The active material layer includes a plurality of particles of an active material with a layered rock salt structure, graphene that is in surface contact with the plurality of particles of the active material, and a binder. US20180006325A1 discloses a cathode active material for a lithium secondary battery including lithium transition metal oxide particles, wherein the lithium transition metal oxide particles may include first lithium transition metal oxide particles (first particles) including an interparticular pore and second lithium transition metal oxide particles (second particles) having an average particle diameter within a range of a diameter of the interparticular pore, measured by mercury intrusion porosimetry. By including first particles including an interparticular pore and second particles having an average particle diameter within a range of a diameter of the interparticular pore measured by mercury intrusion porosimetry, the cathode active material may have a reduced interparticular pore present therein. Accordingly, the cathode active material may have an improved pellet density. Consequently, when a lithium secondary battery is manufactured using the cathode active material, the energy density thereof may improve.

### SUMMARY

Aspects of the invention are set out in the appended claims. Provided in embodiments of the present disclosure is a positive-electrode active material having a high compacted density.

According to the invention, a positive-electrode active material is provided in embodiments of the present disclosure. The positive-electrode active material includes first active particles and second active particles. An average particle size of the first active particles is smaller than an average particle size of the second active particles. In a particle size distribution curve of the positive-electrode active material, the first active particles have a first peak, the second active particles have a second peak, and a ratio *r1* of a value of a peak top of the first peak to a value of a peak top of the second peak satisfies: 0.3≤*r1*≤0.8.

In an embodiment, a ratio *r2* of a value of a peak valley between the first peak and the second peak to the value of the peak top of the first peak satisfies: 0.4≤*r2*≤0.7.

In an embodiment, a ratio *r3* of a value of a peak valley between the first peak and the second peak to the value of the peak top of the second peak satisfies: 0.2≤*r3*≤0.4.

In an embodiment, the minimum particle size D'min of the first active particles satisfies: 0.1 µm≤D'min≤0.8 µm; a median particle size D'50 of the first active particles satisfies: 0.5 µm≤D'50≤3 µm; and the maximum particle size D'max of the first active particles satisfies: 1.2 µm≤D'max≤5 µm. The minimum particle size D"min of the second active particles satisfies: 0.6 µm≤D"min≤1.3 µm; a median particle size D"50 of the second active particles satisfies: 5 µm≤D"50≤8 µm; and the maximum particle size D"max of the second active particles satisfies: 32 µm≤D"max≤38 µm.

In an embodiment, the particle size distribution of the positive-electrode active material satisfies: 0.1µm≤Dmin≤1.8µm, 2.2µm≤D10≤6.2µm, 8.3µm≤D50≤21.7µm, 23.1µm≤D90≤29.2µm, 30.7µm≤Dmax≤36.9µm. Dmin denotes the minimum particle size of the positive-electrode active material, D10 is the particle size when a cumulative particle size distribution percentage of the positive-electrode active material reaches 10%, D50 is a particle size when the cumulative particle size distribution percentage of the positive-electrode active material reaches 50%, D90 is a particle size when the cumulative particle size distribution percentage of the positive-electrode active material reaches 90%, Dmax is the maximum particle size of the positive-electrode active material.

In an embodiment, in the positive-electrode active material, a mass ratio *w* of the second active particles to the first active particles satisfies: 1.5≤*w*≤4.

According to the invention, the first active particles and the second active particles are both made from sodium iron phosphate pyrophosphate; a molar ratio *A1* of a sodium element to a phosphorus element in the first active particles satisfies: 1.021≤*A1*≤1.05; and a molar ratio *B1* of an iron element to the phosphorus element in the first active particles satisfies 0.735 *≤B1* ≤0.748.

In an embodiment, a molar ratio *A2* of a sodium element to a phosphorus element in the second active particles satisfies: 1.002≤*A2*≤1.018; and a molar ratio *B2* of an iron element to the phosphorus element in the second active particles satisfies: 0.705 ≤*B2* ≤ 0.73.

In an embodiment, a molar ratio *A* of a sodium element to a phosphorus element in the positive-electrode active material satisfies: 1.008≤*A*≤1.04; and a molar ratio *B* of an iron element to the phosphorus element in the positive-electrode active material satisfies: 0.714≤*B*≤0.748.

In second aspect, a preparing method of a positive-electrode active material is provided in embodiments of the present disclosure. The method includes the following. First active particles are prepared. Second active particles are prepared. An average particle size of the first active particles is smaller than an average particle size of the second active particles. The first active particles and the second active particles are mixed to obtain the positive-electrode active material. In a particle size distribution curve of the positive-electrode active material, the first active particles have a first peak, the second active particles have a second peak, and a ratio *r1* of a value of a first peak top to a value of a second peak top satisfies: 0.3≤*r1*≤0.8.

According to the invention, the first active particles are prepared as follows. A first sodium source, a first phosphorus source, a first iron source, and a first carbon source are provided; the first sodium source, the first phosphorus source, the first iron source, and the first carbon source are stirred and mixed in a solvent to obtain a first slurry, and first spray-drying is performed to obtain a first precursor powder; and first sintering is performed on the first precursor powder to obtain first active particles, where the first active particles are made from sodium iron phosphate pyrophosphate.

In an embodiment, the second active particles are prepared as follows. A second sodium source, a second phosphorus source, a second iron source, and a second carbon source are provided; the second sodium source, the second phosphorus source, the second iron source, and the second carbon source are stirred and mixed in a solvent to obtain a second slurry, and second spray-drying is performed to obtain a second precursor powder; and second sintering is performed on the second precursor powder to obtain second active particles, where the second active particles are made from sodium iron phosphate pyrophosphate.

In an embodiment, during preparing the first active particles, in the first sodium source, the first phosphorus source, and the first iron source, a molar ratio *A1* of a sodium element to a phosphorus element satisfies: 1.021≤*A1*≤1.05, and a molar ratio *B1* of an iron element to the phosphorus element satisfies: 0.735≤*B1*≤0.748.

In an embodiment, during preparing the second active particles, in the second sodium source, the second phosphorus source, and the second iron source, a molar ratio *A2* of a sodium element to a phosphorus element satisfies: 1.002≤*A2*≤1.018, and a molar ratio *B2* of an iron element to the phosphorus element satisfies: 0.705 ≤ *B2* ≤ 0.73.

In an embodiment, in the positive-electrode active material, a mass ratio w of the second active particles to the first active particles satisfies: 1.5≤*w*≤4.

In an embodiment, the first slurry has a solid content ranging from 20% to 40%; the first spray-drying is performed at a temperature ranging from 95°C to 120°C; and the first sintering is performed at a temperature ranging from 450°C to 620°C. The second slurry has a solid content ranging from 20% to 40%; the second spray-drying is performed at a temperature ranging from 95°C to 120°C; and the second sintering is performed at a temperature ranging from 450°C to 620°C.

In a third aspect, a battery is provided in embodiments of the present disclosure. The battery includes an electrolyte, a positive electrode, a separator, and a negative electrode. The positive electrode includes a positive-electrode active material. The separator is located at one side of the positive electrode. The negative electrode is disposed on one side of the separator facing away from the positive electrode. The positive-electrode active material includes first active particles and second active particles. An average particle size of the first active particles is smaller than an average particle size of the second active particles. In a particle size distribution curve of the positive-electrode active material, the first active particles have a first peak, the second active particles have a second peak, and a ratio *r1* of a value of a peak top of the first peak to a value of a peak top of the second peak satisfies: 0.3≤*r1*≤0.8.

The positive-electrode active material in embodiments of the present disclosure includes the first active particles and the second active particles, where the average particle size of the first active particles is smaller than the average particle size of the second active particles. The first active particles have a first peak and the second active particles have a second peak in a particle size distribution curve of the positive-electrode active material, and a ratio *r1* of a value of a peak top of the first peak to a value of a peak top of the second peak satisfies: 0.3≤*r1*≤0.8. In the present disclosure, by compounding the first active particles and the second active particles, the first active particles of a smaller size can well fill voids formed by the stacked second active particles of a larger size, without leaving too much excess of the first active particles after filling the voids. In this way, the positive-electrode active material has a higher compacted density, and the battery has a higher energy density when the positive-electrode active material is used in the battery.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show merely some embodiments of the present disclosure, and a person of ordinary skill in the art may still derive other drawings from these accompanying drawings without creative efforts.
FIG. 1 is a particle size distribution diagram of a positive-electrode active material according to an embodiment of the present disclosure.
FIG. 2 is a schematic flowchart of a preparing method of a positive-electrode active material according to an embodiment of the present disclosure.
FIG. 3 is a schematic structural diagram of a battery according to an embodiment of the present disclosure.
FIG. 4 is a schematic cross-sectional structural view of a battery according to an embodiment of the present disclosure, taken along a direction A-A in FIG. 3.
FIG. 5 is a schematic structural diagram of a positive electrode according to an embodiment of the present disclosure.
FIG. 6 is a schematic structural diagram of a negative electrode according to an embodiment of the present disclosure.
FIG. 7 is a schematic diagram of the positive-electrode active material according to an embodiment of the present disclosure.

Description of Reference Signs:
100-first active particle, 200-second active particle, 10-first peak, 20-second peak, 300-battery, 310-positive electrode, 311-positive current collector, 312-positive-electrode active layer, 320-separator, 330-negative electrode, 331-negative current collector, 332-negative-electrode active layer, 340-housing, 350-end cap assembly; and 360- electrolyte.

### DETAILED DESCRIPTION

The following will clearly and completely describe technical solutions of embodiments of the present disclosure with reference to the accompanying drawings in embodiments of the present disclosure. Apparently, embodiments described herein are merely some embodiments, rather than all embodiments, of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it may optionally include other steps or units that are not listed; In an embodiment, other steps or units inherent to the process, method, product, or device may be included either.

The following will describe the technical solutions in embodiments of the present disclosure with reference to the accompanying drawings.

It may be noted that, for convenience of description, in embodiments of the present disclosure, the same reference signs denote the same components, and for brevity, in different embodiments, detailed description of the same components is omitted.

Sodium iron phosphate pyrophosphate Na₄Fe₃(PO₄)₂(P₂O₇) has a three-dimensional sodium-ion diffusion channel and a sodium superionic conductor structure. The Sodium iron phosphate pyrophosphate Na₄Fe₃(PO₄)₂(P₂O₇) has the characteristics such as a high voltage plateau, a high capacity, an excellent rate, and outstanding cycling stability, and holds significant potential as a positive electrode material for large-scale production in sodium-ion batteries. However, the compacted density of the existing Na₄Fe₃(PO₄)₂(P₂O₇) remains relatively low.

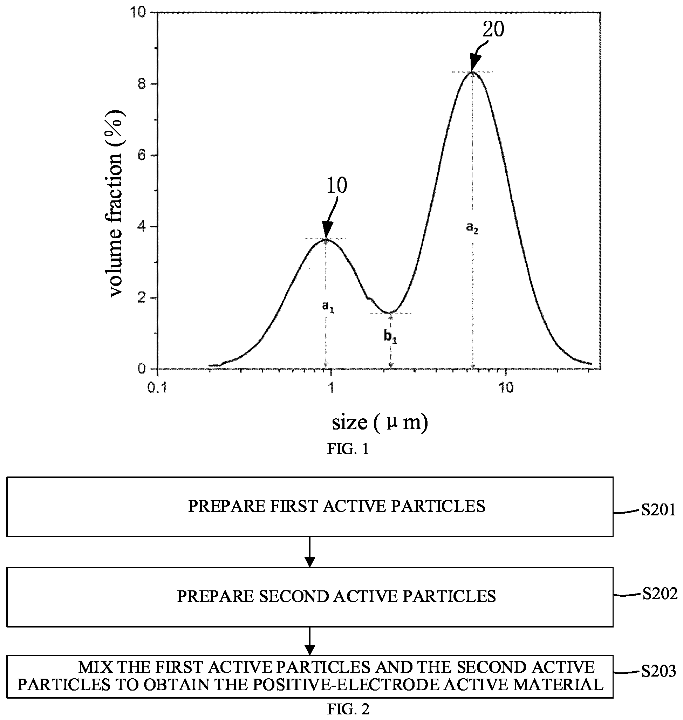

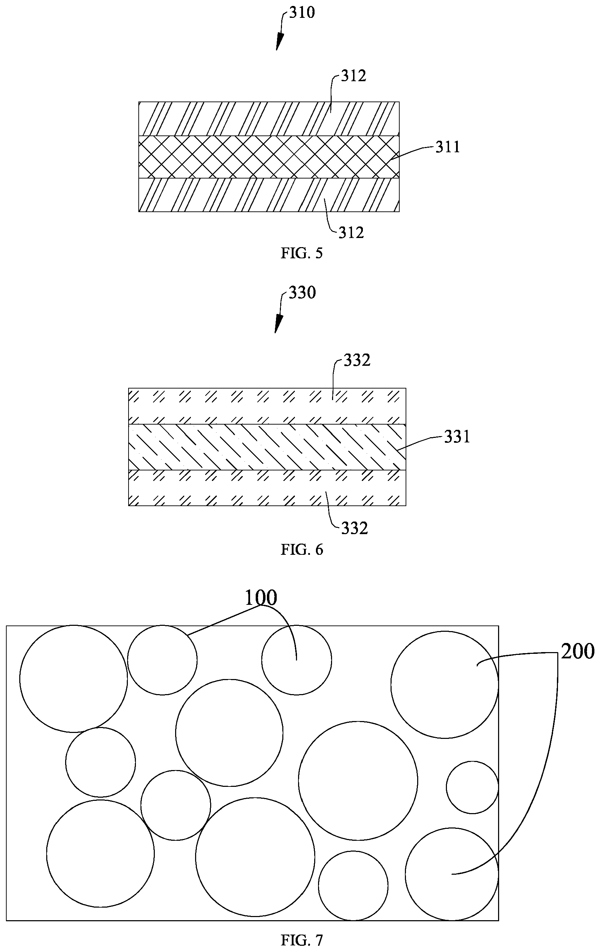

Please refer to FIG. 1 and FIG. 7, in some embodiments, a positive-electrode active material is provided in embodiments of the present disclosure. The positive-electrode active material includes first active particles 100 and second active particles 200. An average particle size of the first active particles 100 is smaller than an average particle size of the second active particles 200. In a particle size distribution curve (i. e. "volume fraction-particle size curve") of the positive-electrode active material, the first active particles 100 have a first peak 10, and the second active particles 200 have a second peak 20, and a ratio *r1* of a value a1 of a peak top of the first peak 10 to a value a2 of a peak top of the second peak 20 satisfies: 0.3≤*r1*≤0.8.

The positive-electrode active material of the present disclosure can be applied to a battery, such as a sodium-ion battery, and serves as a positive-electrode active material of a positive-electrode active layer of a positive electrode of the battery.

It can be appreciated that *r1=a1*/*a2* as illustrated in FIG 1.

Specifically, the ratio *r1* of the value of the peak top of the first peak 10 to the value of the peak top of the second peak 20 may be, but is not limited to, 0.3, 0.35, 0.4, 0.45, 0.5, 0.55, 0.6, 0.65, 0.7, 0.75, 0.8, or the like.

In this embodiment, the ratio *r1* of the value of the peak top of the first peak 10 to the value of the peak top of the second peak 20 can visually reflect the ratio of the first active particles 100 to the second active particles 200 and size ranges of the first active particles 100 and the second active particles 200. If *r1* is too small, it indicates that the proportion of the first active particles 100 is too small, and if *r1* is too large, it indicates that the proportion of the first active particles 100 is too large. In order to enable the positive-electrode active material to have a higher compacted density, it is necessary to enable the first active particles 100 (small particles) to exactly fill the void formed by the accumulated second active particles 200 (large particles). If *r1* is too small, it indicates that the number of first active particles 100 is too small, the number of second active particles 200 is too large, and the number of voids formed after the second active particles 200 are accumulated are too large, and there are not enough first active particles 100 to fill the voids formed by the second active particles 200, thereby reducing the compacted density of the positive-electrode active material. If *r1* is too large, it indicates that the number of first active particles 100 is too large, the number of second active particles 200 is too small, the number of voids formed after the second active particles 200 are accumulated are too small, there are not enough voids for accommodating the first active particles 100, the surplus first active particles 100 are accumulated separately, and the compacted density of the positive-electrode active material is also reduced. When the range of the ratio *r1* of the value of the peak top of the first peak 10 to the value of the peak top of the second peak 20 satisfies 0.3≤*r1*≤0.8, the first active particles 100 can well fill voids formed by the stacked second active particles 200, without leaving too much excess of the first active particles 100 after filling the voids. In this way, the positive-electrode active material has a higher compacted density, and the battery has a higher energy density when the positive-electrode active material is used in the battery.

Further, the ratio *r1* of the value of the peak top of the first peak 10 to the value of the peak top of the second peak 20 satisfies: 0.4≤r1≤0.6. As such, the first active particles 100 can well fill voids formed by the stacked second active particles 200, without leaving too much excess of the first active particles 100 after filling the voids. In this way, the positive-electrode active material has a higher compacted density, and the battery has a higher energy density when the positive-electrode active material is used in the battery.

The positive-electrode active material in embodiments of the present disclosure includes first active particles 100 and second active particles 200. The average particle size of the first active particles 100 is smaller than the average particle size of the second active particles 200. The first active particles 100 have a first peak 10 and the second active particles 200 have a second peak 20. In the particle size distribution curve of the positive-electrode active material, the ratio *r1* of the value of the peak top of the first peak 10 to the value of the peak top of the second peak 20 satisfies: 0.3≤*r1*≤0.8. In the present disclosure, by compounding the first active particles 100 and the second active particles 200, the first active particles 100 of a smaller size can well fill voids formed by the stacked second active particles 200 of a larger size, without leaving too much excess of the first active particles 100 after filling the voids. In this way, the positive-electrode active material has a higher compacted density, and the battery has a higher energy density when the positive-electrode active material is used in the battery.

In some embodiments, a ratio *r2* of a value *b1* of a peak valley between the first peak 10 and the second peak 20 to the value of the peak top *a1* of the first peak 10 satisfies: 0.4≤*r2*≤0.7.

It can be understood that, as illustrated in FIG. 1, *r2 = b1*/*a1.*

Specifically, *r2* may be, but is not limited to, 0.4, 0.43, 0.45, 0.48, 0.5, 0.53, 0.55, 0.58, 0.6, 0.63, 0.65, 0.68, 0.7, etc.

In this embodiment, the value of *r2* represents the difference in size between a similar portion of the first active particles 100 (small particles) and the second active particles 200 (large particles) and the first active particles 100. If *r2* is too small, it indicates that a portion of the first active particles 100 which have the same size with the second active particles 200 is too low, the size of the first active particles 100 differs too much from that of the second active particles 200 and is not continuous, which makes it always necessary to fill with smaller first active particles 100 or second active particles 200 when filling the voids between the second active particles 200, instead of filling with a little larger first active particles 100 or second active particles 200, resulting in a reduced compacted density of the positive-electrode active material. If *r2* is too large, it indicates that the difference in size between the first active particles 100 (small particles) and the second active particles 200 (large particles) is too small, which cannot achieve that the small particles filling voids of the large particles, and also reduces a compacted density of the positive-electrode active material. By setting 0.4≤r2≤0.7, the size of the first active particles 100 and the second active particles 200 have a relatively suitable overlap, the voids formed by stacked second active particles 200 of relatively large sizes in the positive-electrode active material may be filled with second active particles 200 of relatively small sizes, the voids formed by stacked second active particles 200 of smaller sizes may be filled with the first active particles 100 of larger sizes, the voids formed by stacked first active particles 100 of larger sizes may be filled with first active particles 100 of smaller sizes, until the void formed is just filled with the smallest second active particles 200first active particles 100, resulting in a high compacted density of the positive active material, the battery has a higher energy density when the positive active material is applied to the battery.

Further, the range of the ratio *r2* of the value *b1* of the crest value of the first peak 10 to the value *a1* of the crest value of the first peak 10 between the first peak 10 and the second peak 20 is 0.45≤*r2*≤0.6. In this way, the positive-electrode active material has a higher compacted density, and when the positive-electrode active material is applied to a battery, the battery has a higher energy density.

In some embodiments, the ratio *r3* of the value *b1* of the peak valley between the first peak 10 and the second peak 20 to the value of the peak top *a2* of the second peak 20 satisfies: 0.2≤r3≤0.4.

It can be understood that, as illustrated in FIG. 1, *r3 = b1*/*a2.*

Specifically, *r3* may be, but is not limited to, 0.2, 0.22, 0.24, 0.25, 0.26, 0.28, 0.3, 0.32, 0.34, 0.35, 0.36, 0.38, 0.4, or the like.

In this embodiment, the value of *r3* represents the difference in size between a similar portion of the first active particles 100 (small particles) and the second active particles 200 (large particles) and the second active particles 200. If *r3* is too small, it indicates that a portion of the first active particles 100 which have the same size with the second active particles 200 is too low, the size of the first active particles 100 differs too much from that of the second active particles 200 and is not continuous, which makes it always necessary to fill with smaller first active particles 100 or second active particles 200 when filling the voids between the second active particles 200, instead of filling with a little larger first active particles 100 or second active particles 200, resulting in a reduced compacted density of the positive-electrode active material. If *r3* is too large, it indicates that the difference in size between the first active particles 100 (small particles) and the second active particles 200 (large particles) is too small, which cannot achieve that the small particles filling voids of the large particles, and also reduces a compacted density of the positive-electrode active material. By setting 0.2≤r3≤0.4, the size of the first active particles 100 and the second active particles 200 have a relatively suitable overlap, the voids formed by stacked second active particles 200 of relatively large sizes in the positive-electrode active material may be filled with second active particles 200 of relatively small sizes, the voids formed by stacked second active particles 200 of smaller sizes may be filled with the first active particles 100 of larger sizes, the voids formed by stacked first active particles 100 of larger sizes may be filled with first active particles 100 of smaller sizes, until the void formed is just filled with the smallest second active particles 200first active particles 100, resulting in a high compacted density of the positive active material, the battery has a higher energy density when the positive active material is applied to the battery.

In some embodiments, the minimum particle size D'min of the first active particles 100 satisfies: 0.1 µm≤D'min≤0.8 µm; a median particle size D'50 of the first active particles 100 satisfies: 0.5 µm≤D'50≤3 µm; and the maximum particle size D'max of the first active particles 100 satisfies: 1.2 µm≤D'max≤5 µm. The minimum particle size D"min of the second active particles 200 satisfies: 0.6 µm≤D"min≤1.3 µm; a median particle size D"50 of the second active particles 200 satisfies: 5 µm≤D"50≤8 µm; and the maximum particle size D"max of the second active particles 200 satisfies: 32 µm≤D"max≤38 µm.

Specifically, the minimum particle size D'min of the first active particles 100 may be, but is not limited to, 0.1 µm, 0.2 µm, 0.3 µm, 0.4 µm, 0.5 µm, 0.6 µm, 0.7 µm, 0.8 µm, etc. When the minimum particle size D'min of the first active particles 100 is too small or too large, the particle sizes of the first active particles 100 and the second active particles 200 are not optimally compounded, and the compacted density of the positive-electrode active material is reduced.

Specifically, the median particle diameter D'50 of the first active particles 100 may be, but is not limited to, 0.5 µm, 0.8 µm, 1.0 µm, 1.2 µm, 1.4 µm, 1.6 µm, 1.8 µm, 2.0 µm, 2.2 µm, 2.4 µm, 2.6 µm, 2.8 µm, 3 µm. If the median particle size D'50 of the first active particles 100 is too small or too large, the particle sizes of the first active particles 100 and the second active particles 200 are not optimally compounded, and the compacted density of the positive-electrode active material is reduced.

Specifically, the maximum particle diameter D'max of the first active particles 100 may be, but is not limited to, 1.2µm, 1.4µm, 1.6µm, 1.8µm, 2.0µm, 2.2µm, 2.4µm, 2.6µm, 2.8µm, 3µm, 3.0µm, 3.2µm, 3.4µm, 3.6µm, 3.8µm, 4.0µm, 4.2µm, 4.4µm, 4.6µm, 4.8µm, 5µm, etc. If the maximum particle size D'max of the first active particles 100 is too small or too large, so that the particle sizes of both the first active particles 100 and the second active particles 200 are not optimally compounded, and the compacted density of the positive-electrode active material is reduced.

Specifically, the minimum particle size D" min of the second active particles 200 may be, but is not limited to, 0.6 µm, 0.7 µm, 0.8 µm, 0.9 µm, 1.0 µm, 1.1 µm, 1.2 µm, 1.3 µm, etc. If the minimum particle size D"min of the second active particles 200 is too small or too large, the particle sizes of the first active particles 100 and the second active particles 200 are not optimally compounded, and the compacted density of the positive-electrode active material is reduced.

Specifically, the median particle diameter D"50 of the second active particles 200 may be, but is not limited to, 5.0 µm, 5.2 µm, 5.4 µm, 5.6 µm, 5.8 µm, 6.0 µm, 6.2 µm, 6.4 µm, 6.6 µm, 6.8 µm, 7.0 µm, 7.2 µm, 7.4 µm, 7.6 µm, 7.8 µm, 8 µm, etc. If the median particle size D"50 of the second active particles 200 is too small or too large, the particle sizes of the first active particles 100 and the second active particles 200 are not optimally compounded, and the compacted density of the positive-electrode active material is reduced.

Specifically, the maximum particle size D"max max of the second active particles 200 may be, but is not limited to, 32 µm, 33 µm, 34 µm, 35 µm, 36 µm, 37 µm, 38 µm, or the like. If the maximum particle size D"max of the second active particles 200 is too small or too large, the particle sizes of the first active particles 100 and the second active particles 200 are not optimally compounded, and the compacted density of the positive-electrode active material is reduced.

In this embodiment, particle size distributions of the first active particles 100 and the second active particles 200 are designed, thus, the voids formed by stacked large particles can be filled with small particles, and the voids formed by small particles can be filled with smaller particles. In this way, the sizes of the first active particles 100 and the second active particles 200 are optimally compounded, so that the obtained positive-electrode active material has a higher compacted density, and a battery prepared by using the positive-electrode active material has a higher energy density.

In some embodiments, the particle size distribution of the positive-electrode active material satisfies: 0.1µm≤Dmin≤1.8µm, 2.2µm≤D10≤6.2µm, 8.3µm≤D50≤21.7µm, 23.1µm≤D90≤29.2µm, 30.7µm≤Dmax≤36.9µm, wherein Dmin denotes a minimum particle size of the positive-electrode active material, D10 is a particle size when a cumulative volume fraction in a volume-based distribution of the positive-electrode active material reaches 10%, D50 is a particle size when the cumulative volume fraction in a volume-based distribution of the positive-electrode active material reaches 50%, D90 is a particle size when the cumulative volume fraction in a volume-based distribution of the positive-electrode active material reaches 90%, and Dmax denotes a maximum particle size of the positive-electrode active material.

Specifically, the minimum particle size Dmin of the positive-electrode active material may be, but is not limited to, 0.1 µm, 0.2 µm, 0.4 µm, 0.6 µm, 0.8 µm, 1.0 µm, 1.2 µm, 1.4 µm, 1.6 µm, 1.8 µm, etc. If the minimum particle size Dmin of the positive-electrode active material is too small or too large, the sizes of particles of different particle sizes are not optimally compounded, and the compacted density of the positive-electrode active material is reduced.

Specifically, D10 of the positive-electrode active material may be, but is not limited to, 2.2 µm, 2.5 µm, 3 µm, 3.5 µm, 4 µm, 4.5 µm, 5 µm, 5.5 µm, 6.0 µm, 6.2 µm, etc. If the D10 of the positive-electrode active material is too small or too large, the sizes of particles with different particle sizes are not optimally compounded, and the compacted density of the positive-electrode active material is reduced.

Specifically, D50 of the positive-electrode active material may be, but is not limited to, 8.3 µm, 9 µm, 10 µm, 12 µm, 14 µm, 16 µm, 18 µm, 20 µm, 21.7 µm, etc. If the D50 of the positive-electrode active material is too small or too large, the sizes of particles with different particle sizes are not optimally compounded, and the compacted density of the positive-electrode active material is reduced.

Specifically, the D90 of the positive-electrode active material may be, but is not limited to, 23.1 µm, 23.5 µm, 24 µm, 24.5 µm, 25 µm, 25.5 µm, 26 µm, 26.5 µm, 27 µm, 27.5 µm, 28 µm, 28.5 µm, 29.0 µm, 29.2 µm, etc. If the D90 of the positive-electrode active material is too small or too large, the sizes of the particles with different particle sizes will not be optimally compounded, and the compacted density of the positive-electrode active material will be reduced.

Specifically, the Dmax of the positive-electrode active material may be, but is not limited to, 30.7 µm, 31 µm, 31.5 µm, 32 µm, 32.5 µm, 33 µm, 33.5 µm, 34 µm, 34.5 µm, 35 µm, 35.5 µm, 36 µm, 36.5 µm, 36.9 µm, or the like. If the Dmax of the positive-electrode active material is too small or too large, the sizes of particles with different particle sizes will not be optimally compounded, and the compacted density of the positive-electrode active material will be reduced.

In this embodiment, by designing the Dmin, D10, D50, D90, and Dmax in the particle size distribution of the positive-electrode active material, the voids formed by stacked large particles can be filled with the small particles, and the voids formed by the small particles can be filled with the smaller particles. As such, the positive-electrode active material has a higher compacted density, and when the positive-electrode active material is applied to a battery, the battery has a higher energy density.

In some embodiments, in the positive-electrode active material, a mass ratio *w* of the second active particles 200 to the first active particles 100 satisfies: 1.5≤*w*≤4.

Specifically, in the positive-electrode active material, the mass ratio *w* of the second active particles 200 to the first active particles 100 may be, but not limited to, 1.5, 1.6, 1.8, 2.0, 2.2, 2.4, 2.6, 2.8, 3.0, 3.2, 3.4, 3.6, 3.8, 4, etc.

In this embodiment, if the mass ratio *w* of the second active particles 200 to the first active particles 100 is too small, it indicates that the portion of the second active particles 200 is too small and the portion of the first active particles 100 is too large. As such, the voids after the second active particles 200 are accumulated is not enough to fill all the first active particles 100, and the surplus first active particles 100 are accumulated separately, thereby reducing the compacted density of the positive-electrode active material. If the mass ratio *w* of the second active particles 200 to the first active particles 100 is too large, it indicates that the portion of the second active particles 200 are too large and the portion of the first active particles 100 are too small. In this way, there are too many voids after the second active particles 200 are accumulated, and there is not enough second active particles 200first active particles 100 to fill the voids after the second active particles 200 are accumulated, which still reduces the compacted density of the positive-electrode active material. If the mass ratio w of the second active particles 200 to the first active particles 100 satisfies: 1.5≤*w*≤4, the ratio of the first active particles 100 to the second active particles 200 is suitable, and the first active particles 100 can just fill the voids after the second active particles 200 are accumulated. As such, the positive-electrode active material has a relatively high compacted density, and when the positive-electrode active material is applied to a battery, the battery has a high energy density.

In some embodiments, the first active particles 100 and the second active particles 200 are both made from sodium iron phosphate pyrophosphate (having a molecular formula of Na₄Fe₃(PO₄)₂(P₂O₇)). The sodium iron phosphate pyrophosphate has excellent properties such as a relatively high voltage plateau, a relatively high capacity, a relatively good rate performance, and a relatively high cycle stability.

It may be noted that, in the present disclosure, the molecular formula Na₄Fe₃(PO₄)₂(P₂O₇) of the sodium iron phosphate pyrophosphate of the present disclosure is merely a theoretical molecular formula obtained according to the valence state of each element, the ratio of the sodium element to the iron element and the ratio of the sodium element to the phosphorus element in the first active particles 100 and the second active particles 200 in the present disclosure should not be understood as the quantitative ratio in the molecular formula. The ratio of the sodium element to the iron element, and the ratio of the iron element to the phosphorus element in the first active particles 100 and the second active particles 200 of the present disclosure is based on the specific description in the corresponding embodiment of the present disclosure, and the molecular formula should not be construed as a limitation to the composition of specific elements of the first active particles 100 and the second active particles 200 of the present disclosure.

According to the invention, a molar ratio *A1* of the sodium element (Na) to the phosphorus element (P) in the first active particles 100 satisfies: 1.021≤A1≤1.05.

Specifically, the molar ratio *A1* of the sodium element to the phosphorus element in the first active particles 100 may be, but is not limited to, 1.021, 1.023, 1.025, 1.028, 1.030, 1.032, 1.035, 1.038, 1.040, 1.042, 1.045, 1.048, 1.05, or the like.

According to the invention, when the first active particles 100 are prepared, if the molar ratio *A1* of the sodium element to the phosphorus element in the raw materials used for preparing the first active particles 100 is too small, the size of the first active particles 100 obtained is too large, so that the first active particles 100 cannot be well compounded with the second active particles 200 of large sizes, thereby reducing the compacted density of the positive-electrode active material. The increase of the molar ratio *Al* of the sodium element to the phosphorus element in the raw materials used to prepare the first active particles 100 may reduce the sizes of the prepared first active particles 100. However, if the molar ratio *A1* of the sodium element to the phosphorus element in the raw materials used to prepare the first active particles 100 is excessively large, the proportion of the sodium element in the prepared first active particles 100 is excessive, and when the positive-electrode active material is applied to the battery, the excess Na element cannot contribute to the capacity of the battery, thereby reducing the volume energy density and mass energy density of the first active particles 100, further reducing the gram capacity of the battery. In addition, if the molar ratio *A1* of the sodium element to the phosphorus element is too large, the sizes of the prepared first active particles 100 are too small or the number of small particles is too large, and the prepared first active particles 100 cannot be well compounded with the second active particles 200 of large sizes, thereby reducing the compacted density of the positive-electrode active material.

According to the invention, a molar ratio *B1* of the iron element (Fe) to the phosphorus element (P) in the first active particles 100 satisfies: 0.735 ≤ *B1* ≤ 0.748.

Specifically, the molar ratio *B1* of the iron element to the phosphorus element in the first active particles 100 may be, but is not limited to, 0.735, 0.736, 0.738, 0.740, 0.742, 0.744, 0.746, 0.748, or the like.

According to the invention, if the first active particles 100 are prepared, if the mole ratio *B1* of the iron element (Fe) to the phosphorus element (P) in the raw materials used for preparing the first active particles 100 is too small, the sizes of the prepared first active particles 100 are too large, so that the prepared first active particles 100 cannot be well compounded with the second active particles 200 of large sizes, thereby reducing the compacted density of the positive-electrode active material. The increase of the molar ratio *B1* of the iron element to the phosphorus element in the raw materials used to prepare the first active particles 100 may reduce the sizes of the prepared first active particles 100. However, when the molar ratio *B1* of the iron element to the phosphorus element in the raw materials used for preparing the first active particles 100 is too large, the sizes of the prepared first active particles 100 are too small or the number of small particles is too large, and the prepared first active particles 100 cannot be well compounded with the second active particles 200 of large sizes, thereby reducing the compacted density of the positive-electrode active material.

In an embodiment, a molar ratio *A2* of the sodium element to the phosphorus element in the second active particles 200 satisfies: 1.002≤*A2*≤1.018.

Specifically, the molar ratio *A2* of the sodium element to the phosphorus element in the second active particles 200 may be, but is not limited to, 1.002, 1.003, 1.005, 1.008, 1.01, 1.012, 1.014, 1.016, 1.018, or the like.

In this embodiment, when preparing the second active particles 200, if the molar ratio *A2* of the sodium element to the phosphorus element in the raw materials used for preparing the second active particles 200 is too small, the sodium source is insufficient, thereby reducing the volume energy density and mass energy density of the prepared second active particles 200. When the positive-electrode active material is applied to a battery, the gram capacity of the battery is reduced. When the molar ratio *A2* of the sodium element to the phosphorus element in the raw materials used for preparing the second active particles 200 is too large, the sizes of the prepared second active particles 200 are reduced, and the second active particles 200 of small sizes cannot be well compounded with the first active particles 100 of small particle sizes, thereby reducing the compacted density of the positive-electrode active material.

In an embodiment, a molar ratio *B2* of the iron element to the phosphorus element in the second active particles 200 satisfies: 0.705≤*B2*≤0.73.

Specifically, the molar ratio *B2* of the iron element to the phosphorus element in the second active particles 200 may be, but is not limited to, 0.705, 0.706, 0.708, 0.710, 0.712, 0.714, 0.716, 0.718, 0.720, 0.722, 0.724, 0.726, 0.728, 0.73, or the like.

In this embodiment, when preparing the second active particles 200, if the molar ratio *B1* of the iron element (Fe) to the phosphorus element (P) in the raw materials used for preparing the second active particles 200 is too small, the iron source for preparing the second active particles 200 is insufficient, thereby reducing the volume energy density and mass energy density of the second active particles 200, and reducing the gram capacity of the battery when the positive-electrode active material is applied to the battery. When the molar ratio *B1* of the iron element to the phosphorus element in the raw materials used for preparing the second active particles 200 is too large, the inactive iron in the prepared second active particles 200 is increased, which also reduces the volume energy density and mass energy density of the second active particles 200, and reduces the gram capacity of the battery when the positive-electrode active material is applied to the battery.

In the examples of the present disclosure, both the sodium-phosphate ratio *A1* and the iron-phosphate ratio *B1* of the first active particles 100, and the sodium-phosphate ratio *A2* and the iron-phosphate ratio *B2* of the second active particles 200 can be measured by using an inductively coupled plasma optical emission spectrometer (ICP-OES). During the preparing of the first active particles 100 and the second active particles 200, *A1, B1, A2,* and *B2* can be controlled by the ratio of the raw materials.

In some embodiments, the molar ratio *A* of the sodium element to the phosphorus element in the positive-electrode active material satisfies: 1.008≤*A*≤1.04.

Specifically, the molar ratio A of the sodium element to the phosphorus element in the positive-electrode active material may be, but is not limited to, 1.008, 1.01, 1.012, 1.014, 1.016, 1.018, 1.02, 1.022, 1.024, 1.026, 1.028, 1.03, 1.032, 1.034, 1.036, 1.038, 1.04, etc.

In the present embodiment, during preparing of the positive-electrode active material is performed, if the molar ratio A of the sodium element to the phosphorus element in the raw materials used for preparing the positive-electrode active material is excessively small, the compounding of large particles and small particles in the positive-electrode active material cannot be optimized, thereby reducing the compacted density of the positive-electrode active material. In addition, a sodium resource may also be insufficient, thereby reducing a volume energy density and a mass energy density of the prepared second active particles 200. When the positive-electrode active material is applied to the battery, a gram capacity of the battery is reduced. When the molar ratio A of the sodium element to the phosphorus element in the raw materials used for preparing the positive-electrode active material is too large, the proportion of the sodium element in the prepared positive-electrode active material is excessive, and when the positive-electrode active material is applied to the battery, the excess Na element cannot contribute to the capacity of the battery, thereby reducing the volume energy density and mass energy density of the positive-electrode active material, further reducing the gram capacity of the battery. In addition, if the molar ratio *A1* of the sodium element to the phosphorus element is too large, the compounding of large particles and small particles in the positive-electrode active material cannot be optimized, thereby reducing the compacted density of the positive-electrode active material.

In an embodiment, a molar ratio *B* of the iron element to the phosphorus element in the positive-electrode active material satisfies: 0.714≤*B*≤0.748.

Specifically, the molar ratio *B* of the iron element to the phosphorus element in the positive-electrode active material may be, but is not limited to, 0.714, 0.716, 0.718, 0.720, 0.722, 0.724, 0.726, 0.728, 0.73, 0.732, 0.734, 0.736, 0.738, 0.74, 0.742, 0.744, 0.746, 0.748, etc.

In the present embodiment, during preparing of the positive-electrode active material, if the molar ratio *B* of the iron element (Fe) to the phosphorus element (P) in the raw materials used for preparing the positive-electrode active material is too small, the compounding of large particles and small particles in the positive-electrode active material cannot be optimized, and the compacted density of the positive-electrode active material is reduced. In addition, the iron source in the positive-electrode active material is also insufficient, thereby reducing the volume energy density and mass energy density of the second active particles 200, and reducing the gram capacity of the battery when the positive-electrode active material is applied to the battery. When the molar ratio *B1* of the iron element to the phosphorus element in the raw materials used for preparing the positive-electrode active material is too large, the amount of inactive iron in the prepared positive-electrode active material is increased, which also reduces the volume energy density and mass energy density of the positive-electrode active material, and reduces the gram capacity of the battery when the positive-electrode active material is applied to the battery. In addition, the compounding of large particles and small particles in the positive-electrode active material cannot be optimized, which reduces the compacted density of the positive-electrode active material.

The powder compacted density of the positive-electrode active material in the embodiments of the present disclosure ranges from 2.05 g/cm³ to 2.35 g/cm³. Specifically, it may be, but is not limited to, 2.05 g/cm3, 2.10 g/cm3, 2.15 g/cm3, 2.20 g/cm3, 2.25 g/cm3, 2.30 g/cm3, 2.35 g/cm3, etc.

In the embodiment of the present disclosure, when a numerical range of from *a* to *b* is involved, if it is not specified, it means that the value may be any value between *a* and *b,* including an end point value *a* and an end point value *b*.

In the disclosure, the powder compacted density testing method is as follows. 2g to 3g of Na₄Fe₃(PO₄)₂(P₂O₇) powder is added into a mold with a diameter of 13mm, a pressure of 3 tons is applied and maintained for 10 seconds, and then the pressure is released. The mass and volume of a compacted cylinder are measured, and the powder compacted density is calculated.

The electrode-level compacted density (after being prepared as a positive electrode) of the positive-electrode active material of embodiments of the disclosure ranges from 2.10 g/cm³ to 2.4g/cm³. Specifically, it may be but is not limited to 2.10g/cm^{3,} 2.15g/cm³, 2.20g/cm³, 2.25g/cm³, 2.30g/cm³, 2.35g/cm³, 2.4g/cm³, etc.

In the disclosure, an electrode-level compacted density testing method is as follows. The thickness of an aluminum foil is pre-measured, the aluminum foil is cut into a 12mm disc, and the mass of the 12mm disc is pre-measured. The thickness of a positive electrode prepared from the positive-electrode active material is measured, the positive electrode is cut into a 12mm disc, and the mass of the 12mm disc is measured. The mass and volume of the positive-electrode active material on the positive electrode are calculated, and thus the compacted density of the positive-electrode active material on the positive electrode is calculated.

The positive-electrode active material in embodiments of the present disclosure has a higher powder compacted density and a higher electrode-level compacted density.

The positive electrode active of embodiments of the disclosure may be prepared by the methods described in the following embodiments of the disclosure. Additionally, it may also be prepared by other methods. The preparation methods in embodiments of the disclosure only represent one or more preparation methods for the positive electrode active of the disclosure, and should not be construed as limiting the positive electrode active provided in embodiments of the disclosure.

Referring to FIG. 2, a preparing method of a positive-electrode active material is provided in embodiments of the present disclosure. The method includes the following.

At S201, first active particles are prepared.

Specifically, a first sodium source, a first phosphorus source, a first iron source, and a first carbon source are provided; the first sodium source, the first phosphorus source, the first iron source, and the first carbon source are stirred and mixed in a solvent to obtain a first slurry, and first spray-drying is performed to obtain a first precursor powder; and first sintering is performed on the first precursor powder to obtain first active particles, where the first active particles are made from sodium iron phosphate pyrophosphate.

At S202, second active particles are prepared.

Specifically, a second sodium source, a second phosphorus source, a second iron source, and a second carbon source are provided; the second sodium source, the second phosphorus source, the second iron source, and the second carbon source are stirred and mixed in a solvent to obtain a second slurry, and second spray-drying is performed to obtain a second precursor powder; and second sintering is performed on the second precursor powder to obtain second active particles, where the second active particles are made from sodium iron phosphate pyrophosphate, and an average particle size of the first active particles is smaller than an average particle size of the second active particles.

At S203, the first active particles and the second active particles are mixed to obtain the positive-electrode active material. In a particle size distribution curve of the positive-electrode active material, the first active particles have a first peak, the second active particles have a second peak, and a ratio *r1* of a value of a first peak top to a value of a second peak top satisfies: 0.3≤*r1*≤0.8.

For detailed description of the first active particles, the second active particles, and the positive-electrode active material, reference may be made to the description of the corresponding parts in the foregoing embodiments, which will not be repeatedly described herein in detail.

The positive-electrode active material prepared by using the preparing method of the positive-electrode active material according to an embodiment of the present disclosure includes first active particles and second active particles, where an average particle size of the first active particles is smaller than an average particle size of the second active particles. The first active particles have a first peak 10 and the second active particles have a second peak 20. In a particle size distribution curve of the positive-electrode active material, and a ratio *r1* of a value of a peak top of the first peak 10 to a value of a peak top of the second peak 20 satisfies: 0.3≤*r1*≤0.8.In the present disclosure, by compounding the first active particles and the second active particles, the first active particles of a smaller size can well fill voids formed by the stacked second active particles of a larger size, without leaving too much excess of the first active particles after filling the voids. In this way, the positive-electrode active material has a higher compacted density, and the battery has a higher energy density when the positive-electrode active material is used in the battery.

In an embodiment, the first sodium source may include at least one of sodium dihydrogen phosphate, sodium pyrophosphate, sodium carbonate, sodium acetate, amorphous NaₓFe_{y}P_{z}Oₖ compounds with non-fixed compositions, these compounds containing crystal water, etc.

In an embodiment, the first phosphorus source may include at least one of sodium dihydrogen phosphate, sodium pyrophosphate, ammonium dihydrogen phosphate, amorphous NaₓFe_{y}P_{z}Oₖ compounds with non-fixed compositions, these compounds containing crystal water, etc.

In an embodiment, the first iron source may include at least one of ferrous oxalate, iron nitrate, ferrous sulfate, amorphous NaₓFe_{y}P_{z}Oₖ compounds with non-fixed compositions, these compounds containing crystal water, etc. For example, ferrous oxalate may be replaced with ferrous oxalate dihydrate.

In an embodiment, the first carbon source may include at least one of glucose, sucrose, starch, polyethylene glycol, ascorbic acid, citric acid, carbon nanotubes, graphene, etc. The first active particles prepared in the disclosure exhibit poor conductivity. Adding a carbon source during the preparation of the first active particles can improve the conductivity of the first active particles.

In an embodiment, during preparing of the first active particles, in the first sodium source, the first phosphorus source, and the first iron source, a molar ratio *A1* of a sodium element to a phosphorus element satisfies: 1.021≤*A1*≤1.05, and a molar ratio *B1* of an iron element to the phosphorus element satisfies: 0.735≤*B1*≤0.748.

Specifically, in the first sodium source, the first phosphorus source, and the first iron source, the molar ratio *A1* of the sodium element to the phosphorus element may be, but is not limited to, 1.021, 1.023, 1.025, 1.028, 1.030, 1.032, 1.035, 1.038, 1.040, 1.042, 1.045, 1.048, 1.05, or the like. If the molar ratio *A1* of the sodium element to the phosphorus element in the first sodium source and the first phosphorus source is too small, the size of the first active particles obtained is too large, so that the first active particles cannot be well compounded with the second active particles of large sizes, thereby reducing the compacted density of the positive-electrode active material. The increase of the molar ratio *A1* of the sodium element to the phosphorus element in the first sodium source and the first phosphorus source can reduce the sizes of the prepared first active particles. However, if the molar ratio *A1* of the sodium element to the phosphorus element in the first sodium source and the first phosphorus source is excessively large, the proportion of the sodium element in the prepared first active particles is excessive, and when the positive-electrode active material is applied to the battery, the excess Na element cannot contribute to the capacity of the battery, thereby reducing the volume energy density and mass energy density of the first active particles, further reducing the gram capacity of the battery. In addition, in the first sodium source and the first phosphorus source, if the molar ratio *A1* of the sodium element to the phosphorus element is too large, the sizes of the prepared first active particles are too small or the number of small particles is too large, and the prepared first active particles cannot be well compounded with the second active particles of large sizes, thereby reducing the compacted density of the positive-electrode active material.

Specifically, the molar ratio *B1* of the iron element to the phosphorus element in the first phosphorus source may be, but is not limited to, 0.735, 0.736, 0.738, 0.740, 0.742, 0.744, 0.746, 0.748, or the like. If the molar ratio *B* of the iron element to the phosphorus element in the first phosphorus source and the first iron source is too small, the sizes of the prepared first active particles are too large, so that the prepared first active particles cannot be well compounded with the second active particles of large sizes, thereby reducing the compacted density of the positive-electrode active material. The increase of the molar ratio *B1* of the iron element to the phosphorus element in the raw materials may reduce the sizes of the first active particles prepared. However, when the molar ratio *B* of the iron element to the phosphorus element in the first phosphorus source and the first iron source is too large, the sizes of the prepared first active particles are too small or the number of small particles is too large, so that the prepared first active particles cannot be well compounded with the second active particles of large sizes, thereby reducing the compacted density of the positive-electrode active material.

In an embodiment, at S201, the first active particles are prepared as follows. The first sodium source, the first phosphorus source, the first iron source, and the first carbon source are stirred in water (it can be understood that the solvent may be water), and a first sand milling is performed to obtain a first slurry. The first slurry is placed in a spray dryer for first spray-drying to obtain a first precursor powder. The first precursor powder is placed in a sintering furnace for first sintering under an inert atmosphere (such as nitrogen, helium, argon, etc.) to obtain the first active particles, where the first active particles are made from sodium iron phosphate pyrophosphate.

In the present embodiment, before the first spray-drying, the raw materials (i. e., the first sodium source, the first phosphorus source, the first iron source, and the first carbon source) are first subject to a first sand milling and mixing. First sand milling can reduce the particle sizes of the raw materials, providing a prerequisite for the formation of the sodium iron phosphate pyrophosphate. Additionally, first sand milling ensures thorough mixing of soluble and insoluble substances in the raw materials, avoiding the increase of the probability of impurity phases forming in the final sodium iron phosphate pyrophosphate due to non-uniform mixing of the raw materials when multiple insoluble raw materials are present.

In an embodiment, the solid content of the first slurry ranges from 20% to 40%. Specifically, the solid content of the first slurry may be, but is not limited to, 20%, 22%, 24%, 26%, 28%, 30%, 32%, 34%, 36%, 38%, 40%, or the like. If the solid content of the first slurry is too low, the yield of the first active particles is low. In addition, the solvent is excessive, as such, during the spray drying process, volatilization of the solvent is prone to generation of pores in the prepared first active particles, thereby reducing the energy density of the prepared first active particles. If the solid content of the first slurry is too high, when the first sand milling is performed, the difficulty of the first sand milling is increased, and even the first sand milling cannot be sufficiently performed.

In an embodiment, the duration of the first sand milling may be 0.5h to 4h. Specifically, the duration of the first sand milling may be, but is not limited to, 0.5h, 1h, 1.5h, 2h, 2.5h, 3h, 3.5h, 4h, etc. If duration of the first sand milling time is too short, the sizes of the raw materials is too large, and the sizes of the finally obtained first active particles Na₄Fe₃(PO₄)₂(P₂O₇) are also too large. If the duration of the first sand milling is too long, it may not make a contribution to the reduction of the particle sizes of the raw materials, but reduce the production efficiency of the first active particles.

In an embodiment, the first sand milling may have a rotation speed ranging from 1000 rpm to 4000 rpm. Specifically, the first sand milling may have a rotation speed of, but not limited to, 1000 rpm, 1500 rpm, 2000 rpm, 2500 rpm, 3000 rpm, 3500 rpm, 4000 rpm, or the like. If the rotation speed of the first sand milling is too slow, the grinding effect on the insoluble raw materials in the first sodium source, the first phosphorus source, the first iron source, and the first carbon source will be insufficient, resulting in oversized raw materials. This may lead to impurity phases in the synthesized sodium iron phosphate pyrophosphate. If the rotation speed of the first sand milling is too high, the first sand mill is overloaded.

In an embodiment, the temperature during the first spray-drying is in a range from 95°C to 120°C. Specifically, the temperature during the first spray-drying may be, but is not limited to, 95°C, 98°C, 100°C, 103°C, 105°C, 108°C, 110°C, 113°C, 115°C, 118°C, 120°C, or the like. If the temperature during the first spray-drying is too low, the raw materials may have a large amount of moisture, thereby causing the particle appearance of the raw materials to be destroyed. In addition, the moisture contained therein contains soluble raw materials, which is not uniformly compounded with the insoluble raw materials in the spray drying, and the soluble raw materials will be secondarily enriched in the insoluble raw materials in the sintering, thereby causing the synthesized sodium iron phosphate pyrophosphate to generate impurity phases. If the temperature during the first spray-drying is too high, the solvent (water) volatilizes too quickly, and holes are easily left in the interior of the first active particles, thereby reducing the compacted density. In addition, energy is wasted, and the production cost of the first active particles is increased.

In an embodiment, the temperature during the first sintering is in a range from 450°C to 620°C Specifically, the temperature during the first sintering may be, but is not limited to, 450°C, 480°C, 500°C, 520°C, 540°C, 560°C, 580°C, 600°C, or the like. If the temperature during the first sintering is too low, the obtained first active particles have too low crystallinity and poor electrical properties. In addition, if the temperature during the first sintering is too low, the carbonization degree of the first carbon source is reduced, so that the electrical conductivity of the first active particles is reduced. Excessively high temperature during the first sintering provokes phase separation in Na₄Fe₃(PO₄)₂(P₂O₇) (the first active particles), which result in generation of low-active impurity phases, thereby reducing the energy density of the first active particles. When the first sintering is applied to a battery, the energy density of the battery is reduced.

In addition, the temperature during the first sintering is in a range from 500°C to 550°C. When the temperature during the first sintering is in this range, Na₄Fe₃(PO₄)₂(P₂O₇) particles prepared have higher electrical conductivity, less low-active impurity phases are generated, and higher energy density is achieved.

In an embodiment, the duration of the first sintering ranges from 2h to 48h. Specifically, the duration of the first sintering may be, but is not limited to, 2h, 4h, 8h, 12h, 16h, 20h, 24h, 28h, 32h, 36h, 40h, 44h, 48h, etc. If the duration of the first sintering is too short, the obtained first active particles have too low crystallinity and poor electrical properties. In addition, the carbonization degree of the first carbon source is reduced, so that the electrical conductivity of the first active particles is reduced. If the duration of the first sintering is too long, phase generation in Na₄Fe₃(PO₄)₂(P₂O₇) (the first active particles) is separated, resulting in low-active impurity phases, which reduces the energy density of the first active particles, and reduces the energy density of the battery when the positive-electrode active material is applied to the battery.

In an embodiment, the second sodium resource may include at least one of sodium dihydrogen phosphate, sodium pyrophosphate, sodium carbonate, sodium acetate, amorphous NaₓFe_{y}P_{z}Oₖ compounds of non-fixed compositions, these compounds containing crystal water, etc.

In an embodiment, the second phosphorus source may include at least one of sodium dihydrogen phosphate, sodium pyrophosphate, ammonium dihydrogen phosphate, amorphous NaₓFe_{y}P_{z}Oₖ compounds of non-fixed compositions, these compounds containing crystal water, etc.

In an embodiment, the second iron source may include at least one of ferrous oxalate, ferric nitrate, ferrous sulfate, amorphous NaₓFe_{y}P_{z}Oₖ compounds of non-fixed compositions, these compounds containing crystal water, etc. For example, ferrous oxalate may be replaced with ferrous oxalate dihydrate.

In an embodiment, the second carbon source is at least one of glucose, sucrose, starch, polyethylene glycol, ascorbic acid, citric acid, carbon nanotubes, graphene, etc. The second active particles prepared in the disclosure exhibit poor conductivity. Adding a carbon source during the preparation of the second active particles can improve the conductivity of the second active particles.

In an embodiment, during preparing of the second active particles, in the second sodium source, the second phosphorus source, and the second iron source, a molar ratio *A2* of a sodium element to a phosphorus element satisfies: 1.002≤*A2*≤1.018, and a molar ratio *B2* of an iron element to the phosphorus element satisfies: 0.705 ≤*B2*≤ 0.73.

Specifically, in the second sodium source, the second phosphorus source, and the second iron source, the molar ratio *A2* of the sodium element to the phosphorus element may be, but is not limited to, 1.002, 1.003, 1.005, 1.008, 1.01, 1.012, 1.014, 1.016, 1.018, or the like. If the molar ratio *A2* of the sodium element to the phosphorus element in the second sodium source, the second phosphorus source, and the second iron source is excessively small, the sodium source is insufficient, the volume energy density and mass energy density of the prepared second active particles are reduced, and the gram capacity of the battery is reduced when the positive-electrode active material is applied to the battery. When the molar ratio *A2* of the sodium element to the phosphorus element in the second sodium source, the second phosphorus source, and the second iron source is too large, the sizes of the prepared second active particles are reduced, and the second active particles of small sizes cannot be well compounded with the first active particles of small particle sizes, thereby reducing the compacted density of the positive-electrode active material.

Specifically, in the second sodium source, the second phosphorus source, and the second iron source, the molar ratio *B2* of the iron element to the phosphorus element may be, but is not limited to, 0.705, 0.706, 0.708, 0.710, 0.712, 0.714, 0.716, 0.718, 0.720, 0.722, 0.724, 0.726, 0.728, 0.73, or the like. If the molar ratio *B2* of the iron element to the phosphorus element in the second sodium source, the second phosphorus source, and the second iron source is excessively small, the iron source in the prepared second active particles is insufficient, thereby reducing the volume energy density and mass energy density of the second active particles, and reducing the gram capacity of the battery when the positive-electrode active material is applied to the battery. When the molar ratio *B2* of the iron element to the phosphorus element in the second sodium source, the second phosphorus source, and the second iron source is too large, the amount of inactive iron in the prepared second active particles is increased, which also reduces the volume energy density and mass energy density of the second active particles, and reduces the gram capacity of the battery when the positive-electrode active material is applied to a battery.

In an embodiment, at S202, second active particles are prepared as follows. The second sodium source, the second phosphorus source, the second iron source, and the second carbon source are stirred in water (it can be understood that the solvent may be water), and a second sand milling is performed to obtain a second slurry. The second slurry is placed in a spray dryer for second spray-drying to obtain a second precursor powder. The second precursor powder is placed in a sintering furnace for second sintering under an inert atmosphere (such as nitrogen, helium, argon, etc.) to obtain the second active particles, where the second active particles are made from sodium iron phosphate pyrophosphate.

In the present embodiment, before the second spray-drying, the raw materials (i. e., the second sodium source, the second phosphorus source, the second iron source, and the second carbon source) are first subject to a second sand milling and mixing. Second sand milling can reduce the particle sizes of the raw materials, providing a prerequisite for the formation of the sodium iron phosphate pyrophosphate. Additionally, second sand milling ensures thorough mixing of soluble and insoluble substances in the raw materials, avoiding the increase of the probability of impurity phases forming in the final sodium iron phosphate pyrophosphate due to non-uniform mixing of the raw materials when multiple insoluble raw materials are present.

In an embodiment, the solid content of the second slurry ranges from 20% to 40%. Specifically, the solid content of the second slurry may be, but is not limited to, 20%, 22%, 24%, 26%, 28%, 30%, 32%, 34%, 36%, 38%, 40%, or the like. If the solid content of the second slurry is too low, the yield of the second active particles is low. In addition, the solvent is excessive, as such, during the spray drying process, volatilization of the solvent is prone to generation of pores in the prepared second active particles, thereby reducing the energy density of the prepared second active particles. If the solid content of the second slurry is too high, when the second sand milling is performed, the difficulty of the second sand milling is increased, and even the second sand milling cannot be sufficiently performed.

In an embodiment, the duration of the second sand milling may be 0.5h to 4h. Specifically, the duration of the second sand milling may be, but is not limited to, 0.5h, 1h, 1.5h, 2h, 2.5h, 3h, 3.5h, 4h, etc. If the duration of the second sand milling is too short, the sizes of the raw materials is too large, and the sizes of the finally obtained second active particles Na₄Fe₃(PO₄)₂(P₂O₇) are also too large. If the duration of the second sand milling is too long, it may not make a contribution to the reduction of the particle sizes of the raw materials, but reduce the production efficiency of the second active particles.

In an embodiment, the second sand milling may have a rotation speed ranging from 1000 rpm to 4000 rpm. Specifically, the second sand milling may have a rotation speed of, but not limited to, 1000 rpm, 1500 rpm, 2000 rpm, 2500 rpm, 3000 rpm, 3500 rpm, 4000 rpm, or the like. If the rotation speed of the second sand milling is too slow, the grinding effect on the insoluble raw materials in the second sodium source, the second phosphorus source, the second iron source, and the second carbon source will be insufficient, resulting in oversized raw materials. This may lead to impurity phases in the synthesized sodium iron phosphate pyrophosphate. If the rotation speed of the second sand milling is too high, the second sand mill is overloaded.

In an embodiment, the temperature during the second spray-drying is in a range from 95°C to 120°C. Specifically, the temperature during the second spray-drying may be, but is not limited to, 95°C, 98°C, 100°C, 103°C, 105°C, 108°C, 110°C, 113°C, 115°C, 118°C, 120°C, or the like. If the temperature during the second spray-drying is too low, the raw materials may have a large amount of moisture, thereby causing the particle appearance of the raw materials to be destroyed. In addition, the moisture contained therein contains soluble raw materials, which is not uniformly compounded with the insoluble raw materials in the spray drying, and the soluble raw materials will be secondarily enriched in the insoluble raw materials in the sintering, thereby causing the synthesized sodium iron phosphate pyrophosphate to generate impurity phases. If the temperature during the second spray-drying is too high, the solvent (water) volatilizes too quickly, and holes are easily left in the interior of the second active particles, thereby reducing the compacted density. In addition, energy is wasted, and the production cost of the second active particles is increased.

In an embodiment, the temperature during the second sintering is in a range from 450°C to 620°C Specifically, the temperature during the second sintering may be, but is not limited to, 450°C, 480°C, 500°C, 520°C, 540°C, 560°C, 580°C, 600°C, or the like. If the temperature during the second sintering is too low, the obtained second active particles have too low crystallinity and poor electrical properties. In addition, if the temperature during the second sintering is too low, the carbonization degree of the second carbon source is reduced, so that the electrical conductivity of the second active particles is reduced. Excessively high temperature during the second sintering provokes phase separation in Na₄Fe₃(PO₄)₂(P₂O₇) (the second active particles), which result in generation of low-active impurity phases, thereby reducing the energy density of the second active particles. When the second sintering is applied to a battery, the energy density of the battery is reduced.

In addition, the temperature during the second sintering is in a range from 500°C to 550°C. When the temperature during the second sintering is in this range, Na₄Fe₃(PO₄)₂(P₂O₇) particles prepared have higher electrical conductivity, less low-active impurity phases are generated, and higher energy density is achieved.

In an embodiment, the duration of the second sintering ranges from 2h to 48h. Specifically, the duration of the second sintering may be, but is not limited to, 2h, 4h, 8h, 12h, 16h, 20h, 24h, 28h, 32h, 36h, 40h, 44h, 48h, etc. If the duration of the second sintering is too short, the obtained second active particles have too low crystallinity and poor electrical properties. In addition, the carbonization degree of the second carbon source is reduced, so that the electrical conductivity of the second active particles is reduced. If the duration of the second sintering is too long, phase separation in Na₄Fe₃(PO₄)₂(P₂O₇) (the second active particles) is generated, resulting in low-active impurity phases, which reduces the energy density of the second active particles, and reduces the energy density of the battery when the positive-electrode active material is applied to the battery.

In some embodiments, when mixing the first active particles with the second active particles, the mass ratio *w* of the second active particles to the first active particles satisfies: 1.5≤*w*≤4.

In particular, the mass ratio w of the second active particles to the first active particles may be, but is not limited to, 1.5, 1.6, 1.8, 2.0, 2.2, 2.4, 2.6, 2.8, 3.0, 3.2, 3.4, 3.6, 3.8, 4, etc. In this embodiment, if the mass ratio w of the second active particles to the first active particles is too small, it indicates that the portion of the second active particles is too small and the portion of the first active particles is too large. As such, the voids after the second active particles are accumulated is not enough to fill all the first active particles, and the surplus first active particles are accumulated separately, thereby reducing the compacted density of the positive-electrode active material. If the mass ratio w of the second active particles to the first active particles is too large, it indicates that the portion of the second active particles are too large and the portion of the first active particles are too small. In this way, there are too many voids after the second active particles are accumulated, and there is not enough first active particles to fill the voids after the second active particles are accumulated, which still reduces the compacted density of the positive-electrode active material. When the mass ratio *w* of the second active particles to the first active particles satisfies: 1.5≤*w*≤4, the ratio of the first active particles to the second active particles is suitable, and the first active particles can just fill the voids after the second active particles are accumulated. As such, the positive-electrode active material has a relatively high compacted density, and when the positive-electrode active material is applied to a battery, the battery has a high energy density.

In an embodiment, the first active particles and the second active particles may be mixed by using a material mixer such as a ball mill or a tube mixer.

When mixing the first active particles with the second active particles, the rotation speed of the mixing can be 200 rpm to 800 rpm (for example, 200 rpm, 300 rpm, 400 rpm, 500 rpm, 600 rpm, 700 rpm, 800 rpm, etc.), and the duration of the mixing ranges from 2h to 48h (for example, 2h, 4h, 8h, 12h, 16h, 20h, 24h, 28h, 32h, 36h, 40h, 44h, 48h, etc.).

The positive-electrode active material in embodiments of the present disclosure will be further described below with reference to specific embodiments.

### Embodiment 1

The positive-electrode active material in present embodiments is prepared by the following operations.
(1) the first active particles are prepared as follows. 178 g of sodium pyrophosphate (i. e. the first sodium source and the first phosphorus source), 145 g of ammonia dihydrogen phosphate (i.e., the first phosphorus source), 346 g of iron oxalate dihydrate (i.e., the first iron source), 20 g of glucose, and 2.5 kg of water are stirred to form a uniform slurry. Spray-drying is performed at 105°C to obtain a first precursor powder. The first precursor powder is stirred in a sintering furnace under nitrogen atmosphere at 550°C for 24 hours, followed by cooling to yield the first active particles (i.e., small-sized Na₄Fe₃(PO₄)₂(P₂O₇) particles).
(2) the second active particle are prepared as follows. 172 g of sodium pyrophosphate (i. e. the second sodium source and the second phosphorus source), 146 g of ammonia dihydrogen phosphate (i.e. the second phosphorus source), 330 g of iron oxalate dihydrate (i.e., the second iron source), 20 g of glucose, and 2.5 kg of water are stirred to form a uniform slurry. Spray-drying is performed at 105°C to obtain a second precursor powder. The second precursor powder is stirred in a sintering furnace under nitrogen atmosphere at 550°C for 24 hours, followed by cooling to yield the second active particles (i. e. large-sized Na₄Fe₃(PO₄)₂(P₂O₇) particles).
(3) the second active particles and the first active particles are mixed at a mass ratio of 6:4 in a tank mixer at a rotation speed of 400 rpm for 12h, and a high compacted density Na₄Fe₃(PO₄)₂(P₂O₇) powder (i. e. the positive-electrode active material) is obtained after the mixing is completed.

### Embodiments 2 to 7 and Comparative Examples 1 to 6

Embodiments 2 to 7 and Comparative Examples 1 to 6 differ from Example 1 in that in the respective Embodiments and Comparative Examples, the raw materials ratios are different, or the mass ratios w of the second active particles to the first active particles are different, as shown in Table 1 below.

Table 2 and Table 3 show the particle size distribution parameters of the first active particles, the second active particles, and the positive-electrode active material prepared in each Example and Comparative Example.

The positive-electrode active material of each of Examples and Comparative Examples is tested for powder compacted density and positive-electrode compacted density, and the testing results are shown in Table 3 below.
(1) Powder compacted density test: 2g to 3g of Na₄Fe₃(PO₄)₂(P₂O₇) powder is added into a mold with a diameter of 13mm, a pressure of 3 tons is applied and held for 10 seconds before release. The mass and volume of a compacted cylinder are measured, and the powder compacted density is calculated.
(2) Positive electrode compacted density test: the thickness and mass of a 12mm aluminum foil disc are measured. The thickness of the positive electrode prepared from the positive-electrode active material in each of Embodiments and Comparative Examples is measured, the positive electrode is cut into a 12mm disc, and the mass of the 12mm disc is measured. The mass and volume of the positive-electrode active material on the positive electrode are calculated, and thus the compacted density of the positive-electrode active material after being prepared as the positive electrode is calculated. The powder compacted density and the electrode-level compacted density of the positive-electrode active material of each Embodiments and Comparative Examples are shown in Table 3 below.

**Table 1 Parameters of the first active particles, the second active particles, and the positive-electrode active material of each of Embodiments and Comparative Examples**

| example | first active particles | | second active particles | | positive-electrode active material | | *w* |
|---|---|---|---|---|---|---|---|
| | A1 | B1 | *A2* | B2 | A | B | |
| embodiment 1 | 1.03 | 0.74 | 1.009 | 0.714 | 1.017 | 0.724 | 1.5 |
| embodiment 2 | 1.021 | 0.735 | 1.003 | 0.705 | 1.009 | 0.715 | 2 |
| embodiment 3 | 1.04 | 0.745 | 1.013 | 0.72 | 1.020 | 0.726 | 3 |
| embodiment 4 | 1.05 | 0.748 | 1.018 | 0.73 | 1.024 | 0.734 | 4 |
| embodiment 5 | 1.03 | 0.74 | 1.009 | 0.714 | 1.016 | 0.723 | 2 |
| embodiment 6 | 1.03 | 0.74 | 1.009 | 0.714 | 1.014 | 0.721 | 3 |
| embodiment 7 | 1.03 | 0.74 | 1.009 | 0.714 | 1.013 | 0.719 | 4 |
| comparative example 1 | 1.03 | 0.74 | 0.9 | 0.68 | 0.952 | 0.704 | 1.5 |
| comparative example 2 | 1.03 | 0.74 | 1.1 | 0.8 | 1.072 | 0.776 | 1.5 |
| comparative example 3 | 0.9 | 0.68 | 1.009 | 0.714 | 0.965 | 0.700 | 1.5 |
| comparative example 4 | 1.1 | 0.8 | 1.009 | 0.714 | 1.045 | 0.748 | 1.5 |
| comparative example 5 | 1.03 | 0.74 | 1.009 | 0.714 | 1.020 | 0.727 | 1.0 |
| comparative example 6 | 1.03 | 0.74 | 1.009 | 0.714 | 1.013 | 0.718 | 5 |

**Table 2 Particle size distributions of the first active particles and the second active particles**

| example | first active particles | | | second active particles | | | *r1* | *r2* | *r3* |
|---|---|---|---|---|---|---|---|---|---|
| | D'min (µm) | D'50 (µm) | D'max (µm) | D"min (µm) | D"50 (µm) | D"max (µm) | | | |
| embodiment 1 | 0.5 | 2.2 | 4.3 | 0.9 | 6.5 | 34 | 0.50 | 0.61 | 0.30 |
| embodiment 2 | 0.7 | 2.8 | 4.7 | 1.2 | 7.4 | 36 | 0.55 | 0.52 | 0.34 |
| embodiment 3 | 0.4 | 2.1 | 4.0 | 0.8 | 6.1 | 33 | 0.44 | 0.65 | 0.28 |
| embodiment 4 | 0.3 | 1.9 | 3.7 | 0.7 | 5.8 | 32 | 0.41 | 0.68 | 0.26 |
| embodiment 5 | 0.5 | 2.2 | 4.3 | 0.9 | 6.5 | 34 | 0.45 | 0.57 | 0.32 |
| embodiment 6 | 0.5 | 2.2 | 4.3 | 0.9 | 6.5 | 34 | 0.41 | 0.52 | 0.35 |
| embodiment 7 | 0.5 | 2.2 | 4.3 | 0.9 | 6.5 | 34 | 0.34 | 0.43 | 0.39 |
| comparative example 1 | 0.5 | 2.2 | 4.3 | 3.2 | 12.6 | 47 | 0.21 | 0.72 | 0.11 |
| comparative example 2 | 0.5 | 2.2 | 4.3 | 0.3 | 1.9 | 3.7 | 1.23 | 0.65 | 1.41 |
| comparative example 3 | 3.2 | 12.6 | 47 | 0.9 | 6.5 | 34 | 1.74 | 0.92 | 2.14 |
| comparative example 4 | 0.05 | 0.4 | 1.1 | 0.9 | 6.5 | 34 | 0.14 | 0.82 | 0.09 |
| comparative example 5 | 0.5 | 2.2 | 4.3 | 0.9 | 6.5 | 34 | 0.92 | 0.71 | 0.88 |
| comparative example 6 | 0.5 | 2.2 | 4.3 | 0.9 | 6.5 | 34 | 0.23 | 0.70 | 0.13 |

**Table 3 Particle size distribution, powder compacted density, and electrode-level compacted density of positive-electrode active materials**

| example | positive-electrode active material | | | | | Powder compacted density (g/cm³) | electrode-level compacted density (g/cm³) |
|---|---|---|---|---|---|---|---|
| | Dmin (µm) | D10 (µm) | D50 (µm) | D90 (µm) | Dmax (µm) | | |
| embodiment 1 | 0.74 | 2.76 | 4.78 | 18.45 | 32.12 | 2.35 | 2.4 |
| embodiment 2 | 1.03 | 3.45 | 5.87 | 20.95 | 36.03 | 2.32 | 2.37 |
| embodiment 3 | 0.70 | 2.90 | 5.10 | 19.45 | 33.8 | 2.23 | 2.31 |
| embodiment 4 | 0.62 | 2.82 | 5.02 | 19.18 | 33.34 | 2.16 | 2.27 |
| embodiment 5 | 0.77 | 2.92 | 5.07 | 19.49 | 33.9 | 2.31 | 2.34 |
| embodiment 6 | 0.80 | 3.12 | 5.43 | 20.78 | 36.13 | 2.25 | 2.31 |
| embodiment 7 | 0.82 | 3.23 | 5.64 | 21.55 | 37.46 | 2.15 | 2.22 |
| comparative example 1 | 2.12 | 5.28 | 8.44 | 25.08 | 41.72 | 2.02 | 2.04 |
| comparative example 2 | 0.38 | 1.20 | 2.02 | 7.88 | 13.74 | 1.99 | 2.01 |
| comparative example 3 | 1.82 | 5.38 | 8.94 | 28.07 | 47.2 | 1.94 | 1.97 |
| comparative example 4 | 0.56 | 2.31 | 4.06 | 16.45 | 28.84 | 1.92 | 1.94 |
| comparative example 5 | 0.70 | 2.53 | 4.35 | 15.90 | 27.45 | 1.97 | 2.03 |
| comparative example 6 | 0.83 | 3.31 | 5.78 | 23.07 | 40.35 | 1.90 | 1.93 |

As can be seen from the test data in Table 2 and Table 3, when 0.3≤*r1*≤0.8 (as in Embodiments 1 to 7), the positive-electrode active material has a higher powder compacted density and an electrode-level compacted density. When *r1* is too small (e. g., as in Comparative Example 1, Comparative Example 4, and Comparative Example 6), both the powder compacted density of the positive-electrode active material and the electrode-level compacted density are reduced. This is attributed to the insufficient quantity of first active particles and the excessive quantity of second active particles. The excess second active particles form abundant voids during packing, while the lack of first active particles fails to fill these voids, thereby reducing the overall compacted density of the positive-electrode active material. When *r1* is too large (e. g., as in Comparative Example 2, Comparative Example 3, and Comparative Example 5), both the powder compacted density and the electrode-level compacted density of the positive-electrode active material are reduced. This is attributed to the excessive quantity of first active particles and insufficient quantity of second active particles. The limited second active particles form insufficient voids during packing, leaving inadequate space to accommodate the first active particles. The excess first active particles subsequently are accumulated separately, further degrading the compacted density of the positive-electrode active material.

From the test data in Table 2 and Table 3, it can be seen that when 0.4≤*r2*≤0.7, the positive-electrode active material has a higher powder compacted density and a higher electrode-level compacted density. When *r2* is too small, both the powder compacted density and the electrode-level compacted density of the positive-electrode active material will be reduced. When r2 is too large, both the powder compacted density and the electrode-level compacted density of the positive-electrode active material will be reduced.

It can be seen from the test data in Table 2 and Table 3 that when 0.2≤*r3*≤0.4, the positive-electrode active material has a higher powder compacted density and a higher electrode-level compacted density. When *r3* is too small, both the powder compacted density and the electrode-level compacted density of the positive-electrode active material will be reduced. When *r3* is too large, both the compacted powder density and the electrode-level compacted density of the positive-electrode active material will be reduced.

It can be seen from the test data in table 2 and table 3 that when the minimum particle size D'min of the first active particles satisfies: 0.1 µm≤D'min≤0.8 µm, a median particle size D'50 of the first active particles satisfies: 0.5 µm≤D'50≤3 µm, the maximum particle size D'max of the first active particles satisfies: 1.2 µm≤D'max≤5 µm, the minimum particle size D"min of the second active particles satisfies: 0.6 µm≤D"min≤1.3 µm, a median particle size D"50 of the second active particles satisfies: 5 µm≤D"50≤8 µm, and the maximum particle size D"max of the second active particles satisfies: 32 µm≤D"max≤38 µm, the obtained positive-electrode active material has a higher powder compacted density and a higher electrode-level compacted density, and the powder compacted density of the positive-electrode active material and the electrode-level compacted density of the positive-electrode active material will be reduced when the distribution of the first active particles or the second active particles exceeds these ranges.

It can be seen from the test data in Table 2 and Table 3 that when the particle size distribution of the positive-electrode active material satisfies: 0.1 µm≤Dmin≤1.8 µm, 2.2µm ≤ D10 ≤ 6.2µm, 8.3µm ≤ D50 ≤ 21.7µm, 23. 1µm ≤ D90 ≤ 29.2µm, and 30.7µm ≤ Dmax ≤ 36.9µm, the positive-electrode active material has a higher powder compacted density and a higher electrode-level compacted density. The powder compacted density and the electrode-level compacted density of the positive-electrode active material will be reduced when the distribution of the first active particles or the second active particles exceeds these ranges.

From the test data in Table 1 and Table 3, it can be seen that when the molar ratio *A1* of the sodium element to the phosphorus element in the first active particles satisfies: 1.021≤*A1*≤1.05, and the molar ratio *B1* of the iron element to the phosphorus element in the first active particles satisfies: 0.735 ≤ *B1* ≤ 0.748, the positive-electrode active material has a higher powder compacted density and a higher electrode-level compacted density. This is because when the sodium-to-phosphorus ratio and the iron-to-phosphorus ratio of the first active particles satisfy theses relational expressions, the prepared first active particles can have an appropriate particle size distribution, and after the first active particles are compounded with the second active particles, the positive-electrode active material can have a higher powder compacted density and a higher electrode-level compacted density.

It can be seen from the test data in Table 1 and Table 3 that, when the molar ratio of the sodium element to the phosphorus element *A2* in the second active particles satisfies: 1.002≤*A2*≤1.018, and when the molar ratio *B2* of the iron element to the phosphorus element in the second active particles 0.705≤*B2*≤0.73, the positive-electrode active material has a higher powder compacted density and a higher electrode-level compacted density. This is because when the sodium-to-phosphorus ratio and the iron-to-phosphorus ratio of the second active particles satisfy theses relational expressions, the prepared second active particles can have an appropriate particle size distribution, and after the second active particles are compounded with the first active particles, the positive-electrode active material can have a higher powder compacted density and a higher electrode-level compacted density.

It can be seen from the test data in Table 1 and Table 3 that, when the mass ratio w of the second active particles to the first active particles in the positive-electrode active material satisfies: 1.5≤*w*≤4, the positive-electrode active material can have a higher powder compacted density and a higher electrode-level compacted density. Both a large and a small mass ratio w of the second active particles to the first active particles will reduce the compacted powder density and the electrode-level compacted density of the positive-electrode active material.

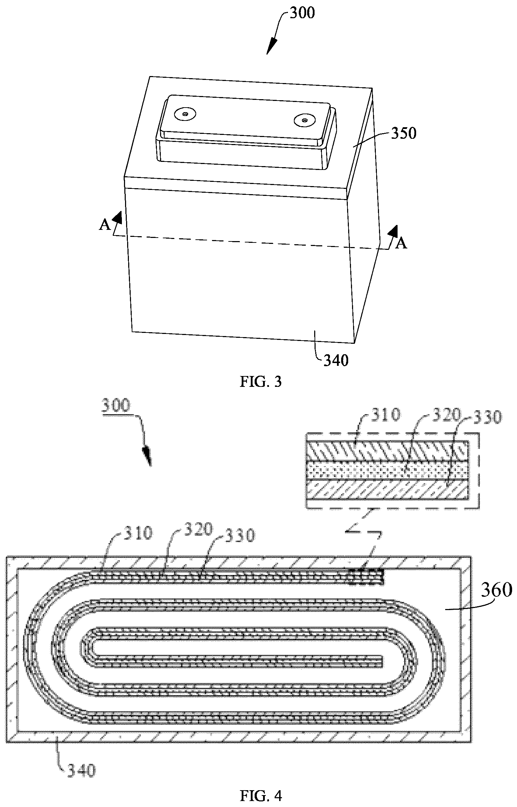

Referring to Figs. 3 and 4, embodiments of the disclosure further provide a battery 300. The battery 300 includes an electrolyte 360, a positive electrode 310, a separator 320, and a negative electrode 330. The positive electrode 310 includes the positive-electrode active material in embodiments of the disclosure, and the positive electrode 310 is immersed in the electrode solution. The separator 320 is disposed on one side of the positive electrode 310 and is immersed in the electrode. The negative electrode 330 is disposed on one side of the separator 320 facing away from the positive electrode 310 and is immersed in the electrolye.

The battery 300 of embodiments of the disclosure may be, but is not limited to a sodium-ion battery 300.

Understandably, the positive electrode 310, the separator 320, and negative electrode 330 are sequentially stacked to form an electrode assembly. The electrode assembly may include, but is not limited to, a wound structure or a stacked structure, which is not specifically limited in this disclosure.

In an embodiment, the electrolyte 360 includes a solvent and an electrolyte salt.

Reference is made to FIG. 5, In an embodiment, the positive electrode 310 includes a positive current collector 311 and a positive-electrode active layer 312. The positive current collector 311 may be, but is not limited to aluminum foil and aluminum sheet. The positive-electrode active layer 312 includes the positive-electrode active material, a first conductive agent, a first bonding agent, a first thickening agent, etc.

Reference is made to FIG. 6, In an embodiment, the negative electrode 330 includes a negative current collector 331 and a negative-electrode active layer 332. The negative current collector 331 may be, but is not limited to copper foil and copper sheet. The negative-electrode active layer 332 includes a negative-electrode active material, a second conductive agent, a second bonding agent, a second thickening agent, etc.

In an embodiment, the separator 320 may be, but is not limited to at least one of polypropylene film (PP film), polyethylene film (PE film), ceramic separator 320, etc.

In an embodiment, the battery 300 further includes a casing 340 and an end cap assembly 350. The casing 340 and the end cap assembly 350 enclose to define a closed accommodating chamber (not illustrated in the drawings), which is configured to accommodate the electrolyte 360, the positive electrode 310, the separator 320, and the negative electrode 330. It may be understood that, the end cap assembly 350 is electrically connected to the positive electrode 310 and the negative electrode 330. The positive electrode 310 and the negative electrode 330 are led out from the end cap assembly 350 so as to electrically connect an external device or other batteries 300.

The term "embodiment" or "implementation" referred to herein means that particular features, structures, or characteristics described in conjunction with embodiments may be contained in at least one embodiment of the present disclosure. Phrases appearing in various places in the specification do not necessarily refer to the same embodiment, nor does it refer to an independent or alternative embodiment that is mutually exclusive with other embodiments. It is explicitly and implicitly understood by those skilled in the art that an embodiment described herein may be combined with other embodiments. In addition, it can be further understood that the features, structures, or characteristics described in embodiments of the disclosure may be combined arbitrarily without contradiction therebetween to form another embodiment that does not depart from the scope of the technical solutions of the present disclosure.

Finally, it may be noted that the foregoing implementations are merely intended to illustrate but not limit the technical solutions of the present disclosure. Although the present disclosure is described in detail with reference to the foregoing optimal embodiments, those of ordinary skill in the art may understand that modifications or equivalent replacements can be made to the technical solutions of the present disclosure without departing from the scope of the technical solutions of the present disclosure.

## Claims

1. A positive-electrode active material, comprising first active particles (100) and second active particles (200), wherein an average particle size of the first active particles (100) is smaller than an average particle size of the second active particles (200); and in a particle size distribution curve of the positive-electrode active material, the first active particles (100) have a first peak (10), the second active particles (200) have a second peak (20), and a ratio *r1* of a value of a peak top of the first peak (10) to a value of a peak top of the second peak (20) satisfies: 0.3≤*r1*≤0.8;
wherein the first active particles (100) and the second active particles (200) are both made from sodium iron phosphate pyrophosphate; a molar ratio *A1* of a sodium element to a phosphorus element in the first active particles (100) satisfies: 1.021≤*A1*≤1.05; and a molar ratio *B1* of an iron element to the phosphorus element in the first active particles (100) satisfies 0.735 ≤*B1* ≤0.748.

2. The positive-electrode active material of claim 1, wherein a ratio *r2* of a value of a peak valley between the first peak (10) and the second peak (20) to the value of the peak top of the first peak (10) satisfies: 0.4≤*r2*≤0.7.

3. The positive-electrode active material of claim 1, wherein a ratio *r3* of a value of a peak valley between the first peak (10) and the second peak (20) to the value of the peak top of the second peak (20) satisfies: 0.2≤*r3*≤0.4.

4. The positive-electrode active material of claim 1, wherein in the positive-electrode active material, a mass ratio w of the second active particles (200) to the first active particles (100) satisfies: 1.5≤*w*≤4.

5. The positive-electrode active material of claim 1, wherein a molar ratio *A2* of a sodium element to a phosphorus element in the second active particles (200) satisfies: 1.002≤*A2*≤1.018; and a molar ratio *B2* of an iron element to the phosphorus element in the second active particles (200) satisfies: 0.705 ≤*B2* ≤ 0.73.

6. The positive-electrode active material of claim 1, wherein a molar ratio *A* of a sodium element to a phosphorus element in the positive-electrode active material satisfies: 1.008≤*A*≤1.04; and a molar ratio B of an iron element to the phosphorus element in the positive-electrode active material satisfies: 0.714≤*B*≤0.748.

7. A preparing method of a positive-electrode active material, comprising:
preparing first active particles, comprising:
providing a first sodium source, a first phosphorus source, a first iron source, and a first carbon source; stirring and mixing the first sodium source, the first phosphorus source, the first iron source, and the first carbon source in a solvent to obtain a first slurry, and performing first spray-drying to obtain a first precursor powder; and performing first sintering on the first precursor powder to obtain first active particles, wherein the first active particles are made from sodium iron phosphate pyrophosphate; wherein in the first sodium source, the first phosphorus source, and the first iron source, a molar ratio *A1* of a sodium element to a phosphorus element satisfies: 1.021≤*A1*≤1.05, and a molar ratio *B1* of an iron element to the phosphorus element satisfies: 0.735≤*B1*≤0.748;
preparing second active particles, wherein an average particle size of the first active particles is smaller than an average particle size of the second active particles; and
mixing the first active particles and the second active particles to obtain the positive-electrode active material, wherein in a particle size distribution curve of the positive-electrode active material, the first active particles have a first peak, the second active particles have a second peak, and a ratio *r1* of a value of a first peak top to a value of a second peak top satisfies: 0.3≤*r1*≤0.8.

8. The preparing method of the positive-electrode active material of claim 7, wherein preparing the second active particles, comprises:
providing a second sodium source, a second phosphorus source, a second iron source, and a second carbon source; stirring and mixing the second sodium source, the second phosphorus source, the second iron source, and the second carbon source in a solvent to obtain a second slurry, and performing second spray-drying to obtain a second precursor powder; and performing second sintering on the second precursor powder to obtain second active particles, wherein the second active particles are made from sodium iron phosphate pyrophosphate;
wherein in the second sodium source, the second phosphorus source, and the second iron source, a molar ratio *A2* of a sodium element to a phosphorus element satisfies: 1.002≤*A2*≤1.018, and a molar ratio *B2* of an iron element to the phosphorus element satisfies: 0.705 ≤ *B2* ≤ 0.73.

9. The preparing method of the positive-electrode active material of claim 7 or 8, wherein in the positive-electrode active material, a mass ratio w of the second active particles to the first active particles satisfies: 1.5≤*w*≤4.

10. The preparing method of the positive-electrode active material of claim 8, wherein the first slurry has a solid content ranging from 20% to 40%; the first spray-drying is performed at a temperature ranging from 95°C to 120°C; and the first sintering is performed at a temperature ranging from 450°C to 620°C; and the second slurry has a solid content ranging from 20% to 40%; the second spray-drying is performed at a temperature ranging from 95°C to 120°C; and the second sintering is performed at a temperature ranging from 450°C to 620°C.

11. A battery (300), comprising:
an electrolyte (360);
a positive electrode (310), wherein the positive electrode (310) comprises the positive-electrode active material of any one of claims 1 to 6;
a separator (320) located at one side of the positive electrode (310); and
a negative electrode (330) disposed on one side of the separator (320) facing away from the positive electrode (310).

## Patentansprüche

1. Positivelektrodenaktivmaterial, das erste aktive Partikel (100) und zweite aktive Partikel (200) umfasst, wobei eine durchschnittliche Partikelgröße der ersten aktiven Partikel (100) kleiner ist als eine durchschnittliche Partikelgröße der zweiten aktiven Partikel (200); und in einer Partikelgrößenverteilungskurve des Positivelektrodenaktivmaterials die ersten aktiven Partikel (100) einen ersten Peak (10) aufweisen, die zweiten aktiven Partikel (200) einen zweiten Peak (20) aufweisen, und ein Verhältnis *r1* eines Peak-Höckerpunkt des ersten Peaks (10) zu einem Peak-Höckerpunkt des zweiten Peaks (20) Folgendes erfüllt: 0,3≤*r1*≤0,8;
wobei die ersten aktiven Partikel (100) und die zweiten aktiven Partikel (200) beide aus Natrium-Eisen-Phosphat-Pyrophosphat hergestellt sind; ein Molverhältnis *A1* eines Natriumelements zu einem Phosphorelement in den ersten aktiven Partikeln (100) Folgendes erfüllt: 1,021≤*A1*≤1,05; und ein Molverhältnis *B1* eines Eisen-Elements zum Phosphor-Element in den ersten aktiven Partikeln (100) 0,735 ≤*B1* ≤0,748 erfüllt.

2. Positivelektrodenaktivmaterial nach Anspruch 1, wobei ein Verhältnis *r2* eines Wertes Peak-Talpunkts zwischen dem ersten Peak (10) und dem zweiten Peak (20) zum Wert des Höckerpunkts des ersten Peaks (10) Folgendes erfüllt: 0,4≤*r2*≤0,7.

3. Positivelektrodenaktivmaterial nach Anspruch 1, wobei ein Verhältnis *r3* eines Wertes eines Peak-Talpunkts zwischen dem ersten Peak (10) und dem zweiten Peak (20) zum Wert des Peak-Höckerpunkts des zweiten Peaks (20) Folgendes erfüllt: 0,2≤*r3*≤0,4.

4. Positivelektrodenaktivmaterial nach Anspruch 1, wobei im Positivelektrodenaktivmaterial ein Massenverhältnis *w* der zweiten aktiven Partikel (200) zu den ersten aktiven Partikeln (100) Folgendes erfüllt: 1,5≤*w*≤4.

5. Positivelektrodenaktivmaterial nach Anspruch 1, wobei ein Molverhältnis *A2* eines Natriumelements zu einem Phosphorelement in den zweiten aktiven Partikeln (200) Folgendes erfüllt: 1,002≤*A2*≤1,018; und ein Molverhältnis *B2* eines Eisenelements zum Phosphorelement in den zweiten aktiven Partikeln (200) Folgendes erfüllt: 0,705 ≤*B2* ≤0,73.

6. Positivelektrodenaktivmaterial nach Anspruch 1, wobei ein Molverhältnis *A* eines Natriumelements zu einem Phosphorelement im Positivelektrodenaktivmaterial Folgendes erfüllt: 1,008≤*A*≤1,04; und ein Molverhältnis *B* eines Eisenelements zum Phosphorelement im Positivelektrodenaktivmaterial Folgendes erfüllt: 0,714≤*B*≤0,748.

7. Herstellungsverfahren für ein Positivelektrodenaktivmaterial, umfassend:
Herstellen erster aktiver Partikel, umfassend:
Bereitstellen einer ersten Natriumquelle, einer ersten Phosphorquelle, einer ersten Eisenquelle und einer ersten Kohlenstoffquelle; Rühren und Mischen der ersten Natriumquelle, der ersten Phosphorquelle, der ersten Eisenquelle und der ersten Kohlenstoffquelle in einem Lösungsmittel, um einen ersten Schlamm zu erhalten, und Durchführen eines ersten Sprühtrocknens, um ein erstes Vorläuferpulver zu erhalten; und Durchführen eines ersten Sinterns des ersten Vorläuferpulvers, um erste aktive Partikel zu erhalten, wobei die ersten aktiven Partikel aus Natrium-Eisen-Phosphat-Pyrophosphat hergestellt sind; wobei in der ersten Natriumquelle, der ersten Phosphorquelle und der ersten Eisenquelle ein Molverhältnis *A1* eines Natriumelements zu einem Phosphorelement Folgendes erfüllt: 1,021≤*A1*≤1,05, und
ein Molverhältnis *B1* eines Eisenelements zum Phosphorelement Folgendes erfüllt: 0,735≤*B1*≤0,748;
Herstellen zweiter aktiver Partikel, wobei die durchschnittliche Partikelgröße der ersten aktiven Partikel kleiner ist als die durchschnittliche Partikelgröße der zweiten aktiven Partikel; und
Mischen der ersten aktiven Partikel und der zweiten aktiven Partikel, um das Positivelektrodenaktivmaterial zu erhalten, wobei in einer Partikelgrößenverteilungskurve des Positivelektrodenaktivmaterials die ersten aktiven Partikel einen ersten Peak aufweisen, die zweiten aktiven Partikel einen zweiten Peak aufweisen, und ein Verhältnis *r1* eines Wertes ersten Peak-Höckerpunkts zu einem Wert eines zweiten Peak-Höckerpunkts Folgendes erfüllt: 0,3≤*r1*≤0,8.

8. Herstellungsverfahren für das Positivelektrodenaktivmaterial nach Anspruch 7, wobei das Herstellen der zweiten aktiven Partikel umfasst:
Bereitstellen einer zweiten Natriumquelle, einer zweiten Phosphorquelle, einer zweiten Eisenquelle und einer zweiten Kohlenstoffquelle; Rühren und Mischen der zweiten Natriumquelle, der zweiten Phosphorquelle, der zweiten Eisenquelle und der zweiten Kohlenstoffquelle in einem Lösungsmittel, um einen zweiten Schlamm zu erhalten, und Durchführen eines zweiten Sprühtrocknens, um ein zweites Vorläuferpulver zu erhalten; und Durchführen eines zweiten Sinterns des zweiten Vorläuferpulvers, um zweite aktive Partikel zu erhalten, wobei die zweiten aktiven Partikel aus Natrium-Eisen-Phosphat-Pyrophosphat hergestellt sind;
wobei in der zweiten Natriumquelle, der zweiten Phosphorquelle und der zweiten Eisenquelle ein Molverhältnis *A2* eines Natriumelements zu einem Phosphorelement Folgendes erfüllt: 1,002≤*A2*≤1,018, und ein Molverhältnis *B2* eines Eisenelements zum Phosphorelement Folgendes erfüllt: 0,705 ≤ *B2* ≤ 0,73.

9. Herstellungsverfahren für das Positivelektrodenaktivmaterial nach Anspruch 7 oder 8, wobei im Positivelektrodenaktivmaterial ein Massenverhältnis *w* der zweiten aktiven Partikel zu den ersten aktiven Partikeln Folgendes erfüllt: 1,5≤*w*≤4.

10. Herstellungsverfahren für das Positivelektrodenaktivmaterial nach Anspruch 8, wobei der erste Schlamm einen Feststoffgehalt aufweist, der von 20 % bis 40 % reicht; das erste Sprühtrocknen bei einer Temperatur durchgeführt wird, die von 95 °C bis 120 °C reicht, und das erste Sintern bei einer Temperatur durchgeführt wird, die von 450 °C bis 620 °C reicht; und der zweite Schlamm einen Feststoffgehalt aufweist, der von 20 % bis 40 % reicht; das zweite Sprühtrocknen bei einer Temperatur durchgeführt wird, die von 95 °C bis 120 °C reicht; und das zweite Sintern bei einer Temperatur durchgeführt wird, die von 450 °C bis 620 °C reicht.

11. Batterie (300), umfassend:
ein Elektrolyt (360);
eine positive Elektrode (310), wobei die positive Elektrode (310) das Positivelektrodenaktivmaterial nach einem der Ansprüche 1 bis 6 umfasst;
einen Separator (320), der sich an einer Seite der positiven Elektrode (310) befindet; und
eine negative Elektrode (330), die an einer Seite des Separators (320) angeordnet ist, die von der positiven Elektrode (310) abgewandt ist.

## Revendications

1. Matériau actif d'électrode positive, comportant des premières particules actives (100) et des deuxièmes particules actives (200), dans lequel une taille particulaire moyenne des premières particules actives (100) est plus petite qu'une taille particulaire moyenne des deuxièmes particules actives (200) ; et dans une courbe de distribution de taille particulaire du matériau actif d'électrode positive, les premières particules actives (100) présentent un premier pic (10), les deuxièmes particules actives (200) présentent un deuxième pic (20), et un rapport *r1* d'une valeur d'un sommet de pic du premier pic (10) sur une valeur d'un sommet de pic du deuxième pic (20) satisfait : 0,3 ≤ *r1* ≤ 0,8 ;
dans lequel les premières particules actives (100) et les deuxièmes particules actives (200) sont toutes les deux fabriquées à partir de phosphate-pyrophosphate de fer et de sodium ; un rapport molaire *A1* d'un élément sodium sur un élément phosphore dans les premières particules actives (100) satisfait : 1,021 ≤ *A1* ≤ 1,05 ; et un rapport molaire *B1* d'un élément fer sur l'élément phosphore dans les premières particules actives (100) satisfait 0,735 ≤ *B1* ≤ 0,748.

2. Matériau actif d'électrode positive selon la revendication 1, dans lequel un rapport *r2* d'une valeur d'un creux de pic entre le premier pic (10) et le deuxième pic (20) sur la valeur du sommet de pic du premier pic (10) satisfait : 0,4 ≤ *r2* ≤ 0,7.

3. Matériau actif d'électrode positive selon la revendication 1, dans lequel un rapport *r3* d'une valeur d'un creux de pic entre le premier pic (10) et le deuxième pic (20) sur la valeur du sommet de pic du deuxième pic (20) satisfait : 0,2 ≤ *r3* ≤ 0,4.

4. Matériau actif d'électrode positive selon la revendication 1, dans lequel, dans le matériau actif d'électrode positive, un rapport massique *w* des deuxièmes particules actives (200) sur les premières particules actives (100) satisfait : 1,5 ≤ *w* ≤ 4.

5. Matériau actif d'électrode positive selon la revendication 1, dans lequel un rapport molaire *A2* d'un élément sodium sur un élément phosphore dans les deuxièmes particules actives (200) satisfait : 1,002 ≤ *A2* ≤ 1,018 ; et un rapport molaire *B2* d'un élément fer sur l'élément phosphore dans les deuxièmes particules actives (200) satisfait : 0,705 ≤ *B2* ≤ 0,73.

6. Matériau actif d'électrode positive selon la revendication 1, dans lequel un rapport molaire *A* d'un élément sodium sur un élément phosphore dans le matériau actif d'électrode positive satisfait : 1,008 ≤ *A* ≤ 1,04 ; et un rapport molaire *B* d'un élément fer sur l'élément phosphore dans le matériau actif d'électrode positive satisfait : 0,714 ≤ *B* ≤ 0,748.

7. Procédé de préparation d'un matériau actif d'électrode positive, comportant :
la préparation de premières particules actives, comportant :
la fourniture d'une première source de sodium, d'une première source de phosphore, d'une première source de fer et d'une première source de carbone ; l'agitation et le mélange de la première source de sodium, de la première source de phosphore, de la première source de fer et de la première source de carbone dans un solvant pour obtenir une première suspension, et la réalisation d'un premier séchage par pulvérisation pour obtenir une première poudre de précurseur ; et la réalisation d'un premier frittage sur la première poudre de précurseur pour obtenir des premières particules actives, dans lequel les premières particules actives sont fabriquées à partir de phosphate-pyrophosphate de fer et de sodium ; dans lequel, dans la première source de sodium, la première source de phosphore et la première source de fer, un rapport molaire *A1* d'un élément sodium sur un élément phosphore satisfait : 1,021 ≤ *A1* ≤ 1,05, et
un rapport molaire *B1* d'un élément fer sur l'élément phosphore satisfait : 0,735 ≤ *B1* ≤ 0,748 ;
la préparation de deuxièmes particules actives, dans lequel une taille particulaire moyenne des premières particules actives est plus petite qu'une taille particulaire moyenne des deuxièmes particules actives ; et
le mélange des premières particules actives et des deuxièmes particules actives pour obtenir le matériau actif d'électrode positive, dans lequel, dans une courbe de distribution de taille particulaire du matériau actif d'électrode positive, les premières particules actives présentent un premier pic, les deuxièmes particules actives présentent un deuxième pic, et un rapport *r1* d'une valeur d'un sommet de premier pic sur une valeur d'un sommet de deuxième pic satisfait : 0,3 ≤ *r1* ≤ 0,8.

8. Procédé de préparation du matériau actif d'électrode positive selon la revendication 7, dans lequel la préparation des deuxièmes particules actives comporte :
la fourniture d'une deuxième source de sodium, d'une deuxième source de phosphore, d'une deuxième source de fer et d'une deuxième source de carbone ; l'agitation et le mélange de la deuxième source de sodium, de la deuxième source de phosphore, de la deuxième source de fer et de la deuxième source de carbone dans un solvant pour obtenir une deuxième suspension, et la réalisation d'un deuxième séchage par pulvérisation pour obtenir une deuxième poudre de précurseur ; et la réalisation d'un deuxième frittage sur la deuxième poudre de précurseur pour obtenir des deuxièmes particules actives, dans lequel les deuxièmes particules actives sont fabriquées à partir de phosphate-pyrophosphate de fer et de sodium ;
dans lequel, dans la deuxième source de sodium, la deuxième source de phosphore et la deuxième source de fer, un rapport molaire *A2* d'un élément sodium sur un élément phosphore satisfait : 1,002 ≤ *A2* ≤ 1,018, et un rapport molaire *B2* d'un élément fer sur l'élément phosphore satisfait : 0,705 ≤ *B2* ≤ 0,73.

9. Procédé de préparation du matériau actif d'électrode positive selon la revendication 7 ou 8, dans lequel, dans le matériau actif d'électrode positive, un rapport massique *w* des deuxièmes particules actives sur les premières particules actives satisfait : 1,5 ≤ *w* ≤ 4.

10. Procédé de préparation du matériau actif d'électrode positive selon la revendication 8, dans lequel la première suspension présente une teneur en solides allant de 20 % à 40 % ; le premier séchage par pulvérisation est réalisé à une température allant de 95 °C à 120 °C ; et le premier frittage est réalisé à une température allant de 450 °C à 620 °C ; et la deuxième suspension présente une teneur en solides allant de 20 % à 40 % ; le deuxième séchage par pulvérisation est réalisé à une température allant de 95 °C à 120 °C ; et le deuxième frittage est réalisé à une température allant de 450 °C à 620 °C.

11. Batterie (300), comportant :
un électrolyte (360) ;
une électrode positive (310), dans laquelle l'électrode positive (310) comporte le matériau actif d'électrode positive selon l'une quelconque des revendications 1 à 6 ;
un séparateur (320) situé sur un côté de l'électrode positive (310) ;
une électrode négative (330) disposée sur un côté du séparateur (320) tournant le dos à l'électrode positive (310).
